(19) Europäisches Patentamt / European Patent Office / Office européen des brevets

(11) **EP 3 182 149 B1**

(12) **EUROPEAN PATENT SPECIFICATION**

(45) Date of publication and mention
of the grant of the patent:
**14.11.2018  Bulletin 2018/46**

(51) Int Cl.:
***G01S 5/02*** *(2010.01)*        *G01S 5/14* *(2006.01)*

(21) Application number: **15200848.8**

(22) Date of filing: **17.12.2015**

(54) **METHOD FOR AN ENHANCED LOCATING OF A MOBILE STATION WITHIN A MOBILE CELLULAR NETWORK**

VERFAHREN ZUR VERBESSERTEN ORTUNG EINER MOBILSTATION IN EINEM MOBILEN ZELLULAREN NETZWERK

PROCÉDÉ POUR UNE MEILLEURE LOCALISATION D'UNE STATION MOBILE DANS UN RÉSEAU CELLULAIRE MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.06.2017   Bulletin 2017/25**

(73) Proprietor: **Deutsche Telekom AG
53113 Bonn (DE)**

(72) Inventor: **van den Berge, Fridtjof
53227 Bonn-Oberkassel (DE)**

(74) Representative: **Patentship
Patentanwaltsgesellschaft mbH
Elsenheimerstraße 65
80687 München (DE)**

(56) References cited:
**US-A1- 2008 186 234      US-A1- 2010 271 263
US-A1- 2012 184 297      US-A1- 2013 005 348**

**Description**

TECHNICAL FIELD

The present disclosure relates to a method for an enhanced locating of a mobile station resp. handset within a mobile cellular network including for instance a radio network with at least three base stations and a radio network controller.

BACKGROUND

Location based services today are in most cases a part of everything from control systems to smart weapons, based on spherical trigonometry through a multitude of antennas. Typically most mobile communication user equipment entities have an integrated GPS-chip, which provide its user with all wanted location information. However using such satellite-based system is a cost-raising issue regarding technical complexity of the system and gives the GPS-System a global advantage or even a monopole over other solutions such as for example a Galileo Satellite System. The dependency of at least in the various and worldwide civilian usages, as *it has become an essential part of daily life for millions of people throughout the world,* of the U.S. Department of Defense's GPS is enormous, almost without a likewise capable system which could take over the GPS-role in the society, if for instance the GPS is shut off due to a conflict.

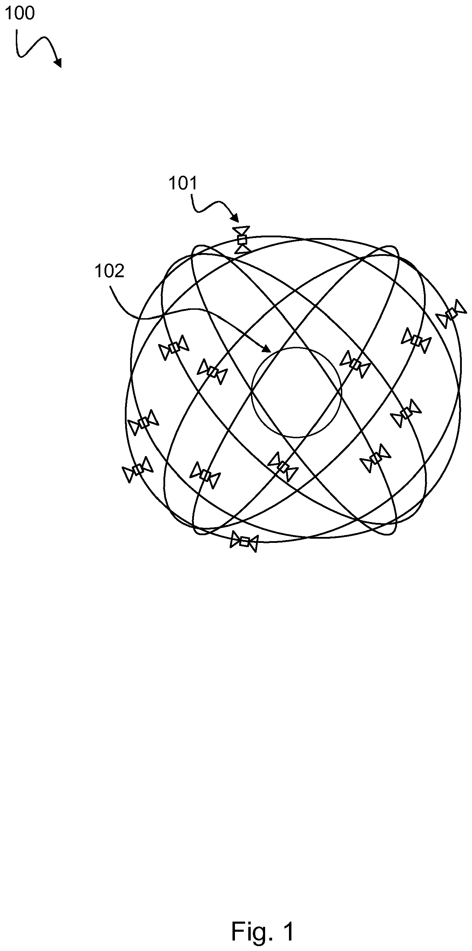

Fig. 1 shows a schematic diagram illustrating such a satellite-based positioning system 100 based on GPS and an exemplary division of satellites 101 around the orbit of the earth 102.
GPS is a navigational- and position-determining satellite system, consistent of no less than 24 satellites (plus some, as *one could call these,* "hot spares" for when one fails) in 6 different orbital planes, with 4 satellites in each plane, at an altitude of nearly 20.200 km. with an angle of 55°-inclination. The basis of GPS is formed by the different spheres of the satellites. To determine a position of a satellite the GPS-receiver measures the very precise duration of signalling travel (height of the orbital path of the satellite) and with the time-stamp the actual position on the orbital path of the satellite. Problems in deviations on the basis of failures within the signalling being sent, which can be caused by atmospheric disturbances, need to be corrected.
A GPS-location determination is done when you are "in-sight" of at least three satellites and an additional one of the 24 active GPS-satellites in orbit. The three first satellites determine your location and the fourth provides the ability to distract a correction values to all measurements, if need be. The correction value is provided by the Satellite Based Augmentation Systems (SBAS), which is needed due to the disturbances of the various particles in the ionosphere and there underneath -from the satellite's perspective- the mainly water-particles in the troposphere, also enables to adjustment on the measured time and makes the synchronisation of the satellites' time with the universal time possible to get a "cross-hair"-positioning resp. crossing lines of position (LOP) at a single position within a tolerance-range of ca. 10 meter, as with a horizontal accuracy for recreational/consumer devices and many cell phones, till down to only 1 mm as for instance in military usages.
A Global Positioning System (GPS)-location determination is possible as the mobile terminal is "in-sight" of at least three and preferable one additional satellites of the 24 GPS-satellites in orbit which provide the location data of the mobile terminal.

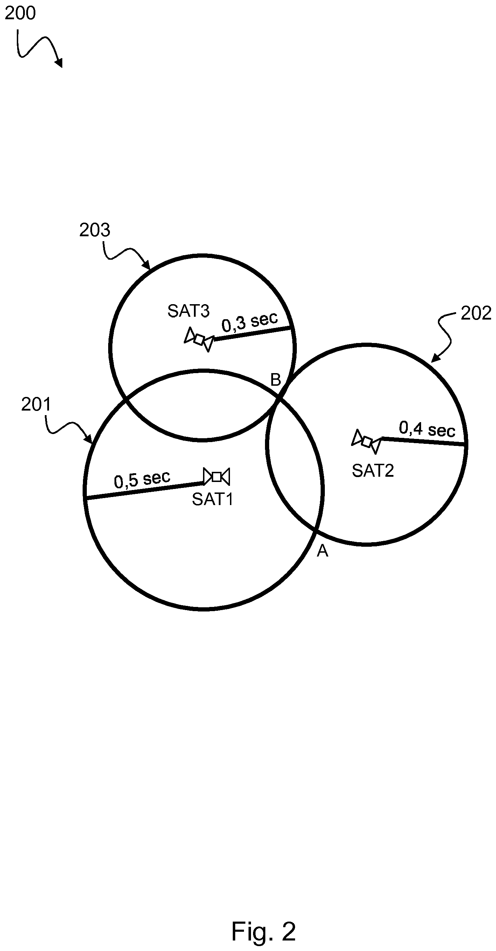

Fig. 2 shows a schematic diagram illustrating a geographical area 200 spanned by the satellite-based positioning system 100 depicted in Figure 1 and exemplary time delays of three satellite signals, based upon their current location, direction of motion, velocity in orbit and time. In the exemplary arrangement a first satellite SAT1 spans the geographical area within a first circle 201 which radius distance corresponds to the distance a radio signal transmitted by the first satellite SAT1 can cover within 0.5 seconds. A second satellite SAT2 spans the geographical area within a second circle 202 which radius distance corresponds to the distance a radio signal transmitted by the second satellite SAT2 can cover within 0.4 seconds. A third satellite SAT3 spans the geographical area within a third circle 203 which radius distance corresponds to the distance a radio signal transmitted by the third satellite SAT3 can cover within 0.3 seconds.
The exact positioning of each satellite SAT1, SAT2, SAT3 in its own orbit is the very essential and the most important issue in being able to calculate a position on the surface of the earth with a very high precision. For this a very enhanced and expensive antenna-, control- and monitoring system for the entire GPS-solution, down to each satellite on its specific satellite-orbit had to be installed. The actual position- and the timing of any GPS-satellite is the very basis for a position-determination by the GPS-positioning system.
The public C/A-code for Coarse/Acquisition has a much lower precision (well over 3 meter). The actual geometry of the satellites in orbit to the receiving party has a direct effect on accuracies. A measure of satellite geometry is called dilution of precision (DOP). The more precise positioning within a lower than 3 meter-range or then even lower are only over a differential-GPS method possible, which is excluded for most users. It is used with a so called P/Y-code for Precision/Encrypted on a separate channel which is only used in non-public / military applications.
A failure in the calculated GPS-positioning of an object on, in this example, the face of the earth is recognized by the performed triangulation, as the times which were calculated to this must be exactly identical. Any deviation in a calculated time-value identifies a failure.

Table 1 according to the internet publication <http://www.microsurvey.com/support/fieldgenius/documentation/PositionAccuracy.pdf> provides an insight into the systematic errors involved with GPS positioning and gives the user an appreciation to following correct procedures.

Table 1: Systematic errors involved with GPS positioning

| Error Description | Possible Magnitude | Reduction Methods |
| --- | --- | --- |
| Broadcast ephemeris orbits | 25 m | Apply differential corrections, use precise ephemerides |
| Satellite clock | 10 m | Apply differential corrections, use computed clock corrections |
| Ionospheric and tropospheric propagation | 2 - 150 m | Apply differential corrections, use dual frequency sensors, baselines kept within reason otherwise modeling is required, avoid periods of high solar activity |
| Selective availability | 50 m | No longer exists |
| Receiver noise | 0.0002 m - 1.5 m | Use identical sensors for reference and rover pairs |
| Receiver clock | 10 m | Apply differential corrections |
| Signal multipath | 0.001 m - 20 m | Antenna ground planes, changing environment, signal analysis |

From this, the applied GPS-effort is for an outstander almost without any (budgetary-limits, as both hardware expenditures for satellites, a multitude of the various ground stations (e. g. antenna-, control-, monitoring-), hard- and software and the management of the very large computer centres -in their plurality- for achieving just the needed signalling to perform the computation on an already very fine-grained positioning, as GPS performs.

A new GPS-broadcast with an update on all important information on a positioning is renewed in sequences with a minimum of 30 seconds, unless for military purposes where sequences will be renewed in much shorter intervals.

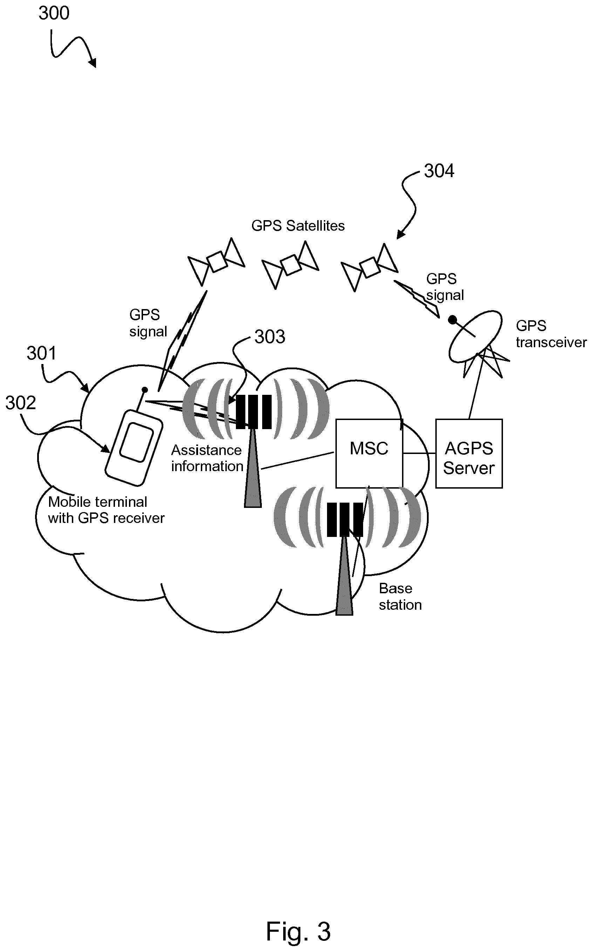

Fig. 3 shows a schematic diagram illustrating a Global Positioning System (GPS) 300 in cooperation with a cellular network 301 to provide the position of a mobile device 302, e.g. through the installed A-GPS chip on the mobile device 302, with a high precision. The mobile network 301 provides the assistance data 303, such as the needed idle periods in the UE's 302 downlink, to provide a detectability of neighbouring BSS/(e)NodeB or any other (future) antenna solution of the UE 302.

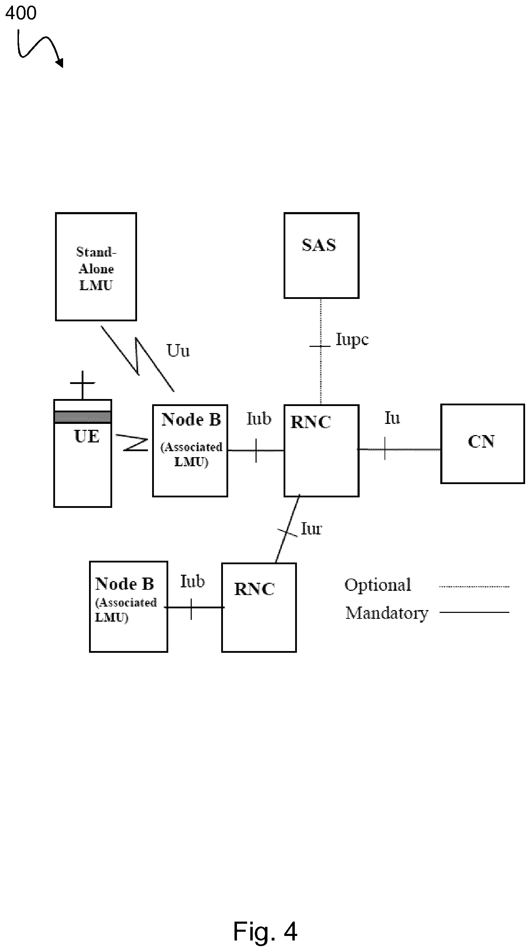

Fig. 4 shows a schematic diagram illustrating the general arrangement of UE positioning architecture 400 in UTRAN according to 3GPP TS 25.305.

With respect to cellular network's positioning abilities, in 3GPP TS 25.305, according to http://www.qtc.jp/3GPP/Specs/25305-b00.pdf, chapter 4.2 on page 11 cites: "Positioning the UE involves two steps: signal measurements and a position estimate and its optional velocity computation based on the measurements". In this, the signal measurement may be made by the User Equipment (UE) - [MO, mobile originated], the NodeB and/or an (eventually stand-alone) Location Measurement Unit (LMU) - [MT, mobile terminated].

Network measurements of a position of a UE through the time of arrival (TOA) of a known signal from the UE should be received by four or more LMUs. These LMUs should then have to be in a geographically vicinity to the UE to be positioned to accurately measure the TOA of the bursts which are provided by the UE.

In the described method a certain similarity to GPS and similar navigational- and position-determining systems is existent, yet on a location-determination precision of about 100 till minimally 25 meters can be achieved on the basis of the development with only the smallest fraction of the U.S. GPS-fund, dependent on various circumstances. As such, it remains as no more than a position estimate computation as it refrains to use an exemplary hard- and software which could compete with GPS and likewise systems.

Within UTRAN the before named method is enhanced by the cell-ID method, Observed Time Difference of Arrival (OTDOA) method that may be assisted by network configurable idle periods, network-assisted Global Navigation Satellite System (GNSS) methods and the Uplink - Time Difference of Arrival (U-TDOA), which also depends on the configurable idle periods and the LMU's vicinity to the UE.

As such, it remains dependent on computational- and configurationally tolerances within the cellular network, as well as on a Global Navigation Satellite System, such as e. g. Galileo and GPS are.

There is a need for obtaining a more precise position estimate as input to a positioning system and an optional velocity computation. As such, only a remarkable improvement can be achieved if only a smallest fraction of the before mentioned fund(-s) would be used to improve for instance the location-determination abilities of a cellular network.

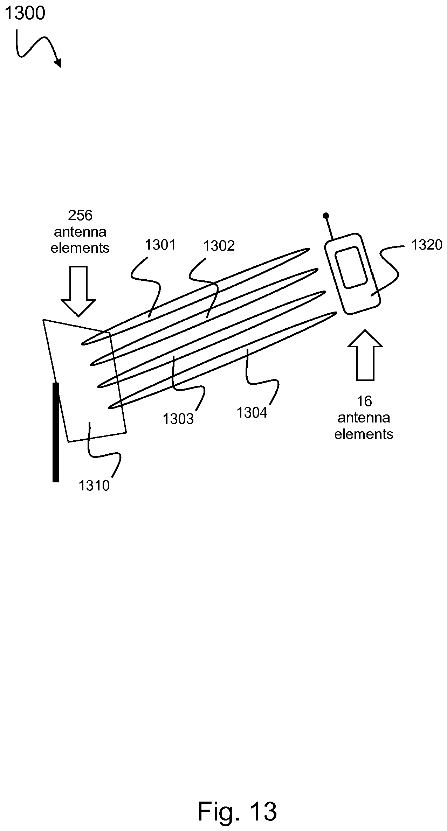

US 2010 / 271263 describes a method for determining a location of a mobile device M based on distances to a plurality of transmitting stations APi (see FIG. 13), wherein a multilateration method for determining the distance of objects in an interior scenario, e.g. a WLAN communication network is applied . The method includes receiving signals with known radio transmission patterns, e.g. signal preambles (See FIG. 1) from a group of transmitting stations APi at the mobile device M. Each received signal is correlated with a corresponding signal having a known radio transmission pattern in order to determine the travel time of the signal between the corresponding sending station APi and the mobile device M. The location of the mobile device M is then determined as a function of the times thus determined.

SUMMARY

It is the object of the invention to provide an improved technique for determining the position of a mobile device, in particular without using a satellite-based positioning system.

By the way, the diversity of tolerance-compensations, as e. g. dilution of precision (DOP) accuracy, the horizontal and vertical RMS tolerance, as well as the observations and time tolerance, within GPS and possible likewise navigational systems, have a different solution method in this idea.

This object is achieved by the features of the independent claims. Further implementation forms are apparent from the dependent claims, the description and the figures.

In order to describe the invention in detail, the following terms, abbreviations and notations will be used:

| | |
|---|---|
| MT: | mobile terminated or mobile terminal |
| MO: | mobile originated |
| LBS: | location-based service |
| LCS: | location services |
| RTLS: | real time location system |
| UE: | user equipment or mobile terminal, respectively |
| TDOA: | time difference of arrival |
| E-OTD: | enhanced observed time difference |
| GPS: | Global Positioning System |
| SAS: | Stand Alone Serving Mobile Location Centre |
| BSS: | base station system |
| BSC: | Base Station Controller |
| RNC: | Radio Network Controller |
| SRNC: | Serving Radio Network Controller |
| SMLC: | Serving Mobile Location Centre |
| CRNC: | Controlling Radio Network Controller |
| LMU: | Location Measurement Unit |
| IP: | Internet Protocol |
| ISO: | International Standardization Organization |
| ISP: | Internet Service Provider |
| OSI: | Open Systems Interconnection Model |

Methods and devices according to the disclosure may use location-based services (LBS), respectively location services (LCS) or real time location systems (RTLS) to determine the position or location of a user within a cellular network. In this a positioning is determined in general through the mobile radio access antennas of a Base Station System (BSS) respectively (evolved) NodeB or possible future solutions. A distance is calculated on the return-message of the user equipment (UE) or mobile terminal (MT) on the initial time difference of arrival (TDOA) or enhanced observed time difference (E-OTD) from the network's mobile radio access antennas. The method can be more precise, as less disturbances, a minor drop in transmission-power (over longer distances) and e. g. a better provisioning of the available bandwidth and/or time-slots can be achieved. Through the Global Positioning System (GPS) or equal navigational satellite systems a higher resolution and thus an enhanced precision of the location-determination can be provided.

Methods and devices according to the disclosure may be applied together with Near LBS (NLBS) techniques to define a precise location determination of a UE within a cellular network environment. NLBS is a method in which local-range technologies such as for instance Bluetooth Low Energy, WLAN, infrared and/or RFID/Near Field Communication Technologies are used to match devices to nearby services.

According to a first aspect, the invention relates to a method for locating a mobile station resp. handset within a mobile cellular network, the method comprising: transmitting at least three radio signals between the mobile station and a corresponding number of at least three base stations, wherein each of the at least three radio signals comprises a time information indicating a transmittal time of the respective radio signal; computing for each of the at least three radio signals a time delay based on a difference between an arrival time and the transmittal time of the respective radio signal; retrieving for each of the at least three radio signals information about transmission path losses of the respective radio signal from a data storage; computing for each of the at least three radio signals a distance of the mobile station to the respective base station based on the time delay and the information about transmission path losses; and determining a location of the mobile station based on trilateration of the at least three distances. All additional base stations may be used to check on for instance failures in delay times and with that distances respective transmission lengths. The three strongest (and nearest) antennas to the network's customer with his user equipment may be the primary source for the performed trilateration, yet these values may be checked on by the values from the additional base stations.

Such a method of locating a mobile station within a mobile cellular network provides the advantage of an improved technique for determining the position of a mobile device because the additional information about transmission path losses can be used to improve the distance estimation and hence the location estimation. A further advantage is the reduced complexity of a system applying this method because no satellite-based positioning system and corresponding equipment is required.

In an implementation form of the method, the information about transmission path losses is stored as a correction matrix in the data storage.

This provides the advantage that the information about transmission path losses is available as a data file, e.g. in form of a matrix or table, respectively and can be efficiently used to correct the estimation values of the distance obtained by the transmission of the radio signals.

In an implementation form, the method comprises: computing a coarse distance of the mobile station resp. handset to the respective base station based on the computed time delay and the speed of light; and refining the computing of the distance of the mobile station to the respective base station by applying the correction matrix to the coarse distance.

This provides the advantage that the accuracy of the method can be improved depending on the availability of information about transmission path losses. I.e. the method can start quickly with a course estimate of the distance and improve its accuracy with time. This is in contrast to a satellite-based positioning where a long initial time is required (in the range of about 30 seconds) for a first reception of the satellite signal and detection of the positioning information.

In an implementation form the method comprises updating the correction matrix based on at least one of the following events: internal events occurring within the mobile cellular network, external events occurring in an antenna coverage region of the mobile station and the respective base station, and static events in a geographical region of the mobile station and the respective base station.

This provides the advantage that the correction matrix may be flexible adjusted to different degrees of precision. Depending on the amount of available information, i.e. the available internal, external and static events, the precision of the location of the mobile station can be flexible adjusted.

In an implementation form the method comprises: relocating an evolved calculation- and computing task of radio access network (RAN) node elements in a computer center; and with an increase of computing power using more detailed and precise geographical data to measure and define the transmission paths over the air with their internal, external and geographical events within their coverage region.

This provides the advantage that the method provides a flexible and scalable way to improve the accuracy of location measurement for determining the position of a mobile device. The calculation and computing task can be flexible and scalable relocated to a computer center depending on the accuracy requirements.

In an implementation form of the method the internal events within the mobile cellular network are related to at least one of: access latency, delays, disturbances, error detection and correction, interferences.

This provides the advantage that considering transmission path losses based on access latency, delays, disturbances, error detection and correction, interferences increases the accuracy of location determination.

In an implementation form of the method the external events are related to changes of at least one of the following parameters: attenuation-loss parameters, channel characteristics, electronic field within air layer, loss-of-signal, temperature, humidity, motion and angle of transmission.

This provides the advantage that considering transmission path losses based on changes in attenuation-loss parameters, channel characteristics, electronic field within air layer, loss-of-signal, temperature, humidity, motion and angle of transmission increases the accuracy of location determination.

In an implementation form of the method the static events are related to changes in the statics of a coverage area of a single antenna of the mobile station resp. handset or the corresponding base station, comprising of at least one of the following: antenna height, antenna position, antenna descent, antenna elevation, objects within a coverage area of the antenna, height and width sizes of the objects, specific angles of the objects with respect to altitude, latitude and longitude to the antenna, material on a facade towards the antenna, reflection areas of the objects, materials of the objects.

This provides the advantage that considering transmission path losses based on antenna height, antenna position, antenna descent, antenna elevation, objects within a coverage area of the antenna, height and width sizes of the objects, specific angles of the objects with respect to altitude, latitude and longitude to the antenna, material on a facade towards the antenna, reflection areas of the objects, materials of the objects increases the accuracy of location determination.

In an implementation form the method comprises: deriving a direct transmission path between the mobile station and the respective base station from the static information.

This provides the advantage that by deriving a direct transmission path, location determination can be improved as dampening effects are reduced compared to indirect transmission paths.

In an implementation form of the method transmitting the at least three radio signals is mobile-originated or mobile-terminated.

This provides the advantage that this method can be flexibly applied, either by the mobile terminal if for example the user wants to know his/her own position or by the base station or by a radio network controller if for example another user of the communication network or a service application want to know the location of the mobile station.

In an implementation form of the method, the information about transmission path losses of the respective radio signal comprises a transmitting antenna identifier and an atomic clock reference time.

Such a method provides the advantage that by including the transmitting antenna identifier, the transmitted radio signal can be unambiguously identified. Such a method provides the further advantage that by including the atomic clock reference time, a very precise time base is available for computing the delay times and therefrom the location of the mobile terminal.

In an implementation form of the method the data storage is located in a base station controller (BSC) or a radio network controller (RNC) configured to control the respective base station. Preferably the controllers should be connected to at least a computing center, to take over the precision enhancing calculations in real time.

This provides the advantage that such a BSC or RNC have enough computing power for computing the various distance estimates, i.e. the method can be efficiently implemented on these network elements.Each controller can transmit the at least relevant entries to the network user with his user equipment (UE), as the UE should be able to calculate its position with the maximum of available correction(-s).

In an implementation form the method comprises: evaluating the information about transmission path losses based on the following formula: $L = 20 \cdot \log_{10}(4 \cdot \pi \cdot d)/\lambda$, where $L$ is a path loss in dB of the respective transmission path, $d$ is a distance of the respective transmission path and $\lambda$ is a wavelength of the respective radio signal.

This provides the advantage that a computational efficient calculation of the distances d is possible when the transmission losses L can be retrieved from the data storage. The wavelength is known a priori.

According to a second aspect, the invention relates to a radio network, comprising:

at least three base stations; and a, or more (in case of e. g. a handover from a), radio network controller configured: to initiate transmitting at least three radio signals between a mobile station within a coverage of the radio network and a corresponding number of the at least three base stations, wherein each of the at least three radio signals comprises a time information indicating a transmittal time of the respective radio signal; to compute for each of the at least three radio signals a time delay based on a difference between an arrival time and the transmittal time of the respective radio signal; to retrieve for each of the at least three radio signals information about transmission path losses of the respective radio signal from a data storage; to compute for each of the at least three radio signals a distance of the mobile station to the respective base station based on the time delay and the information about transmission path losses; and to determine a location of the mobile station based on trilateration of the at least three distances.

Such a radio network provides the advantage of an improved technique for determining the position of a mobile device because the additional information about transmission path losses can be used to improve the distance estimation and hence the location estimation. A further advantage is the reduced complexity of such a radio network because no satellite-based positioning system and corresponding equipment is required.

In an implementation form of the radio network, each base station comprises a plurality of antennas, wherein the information about transmission path losses related to a specific antenna of a base station is stored in a data storage assigned to the specific antenna of the base station.

This provides the advantage that the required information can be distributed across the whole radio network. In particular each antenna has access to the transmission path losses that are caused by transmitting radio signals through the specific antenna.

According to a third aspect, the invention relates to a data storage for storing information about transmission path losses, the data storage comprising: a non-transitory computer-readable medium comprising a plurality of data stores addressable by an identifier of a mobile station and an identifier of a base station, wherein each data store is configured to store information about transmission path losses of a radio signal transmission between the base station and the mobile station.

Such a data storage provides the advantage that an improved technique for determining the position of a mobile device can be implemented by accessing this data storage. The additional information about transmission path losses that are stored in the data storage can be used to improve the distance estimation and hence the location estimation.

The above disclosed methods and devices for locating a mobile station resp. handset within a mobile cellular network provide the following advantages:

Reduction of costs for the end-user, as he will be need only the cellular network's mobile radio access antennas, without any GPS processors or likewise or even different interfaces, to have a precise location determination. Thus the reduction of costs would be obtained by the provision of cheaper models within a certain UE-design and no (further) need to provide for other (NLBS-) location determining services by cellular network companies.

Location-based games-, geo marketing-, location-based media-, location intelligence-, local search-, mobile dating- and mobile positioning services can be brought to customers as a fully network supported provisioning to the customers, with only a third party-involvement for the actual service enabling, but not for the position-/location determination by other third parties, for instance Galileo, GLONASS, GPS etc.

Furthermore new business proposals can be developed by both the cellular network's operator and the providers of apps-functionalities, which have a dependency on a location determination, as even without a GPS-coverage, a full, dependable, precise and a network's own location- or position determination can deliver the precise coordinates to any appropriate receiving party.

There is no more need to install the complete infrastructure of a satellite-based positioning system as such a satellite-based positioning system is not required.

A further advantage to any satellite based location respectively position-determination is that the above described method may be used in a tunnel, for example the Gotthard tunnel with its almost 17 km length, in which any UE is blended out from any satellite (for navigational -) services, as none is in such a venue in a visual line, but can get a very precise knowledge of his exact position within that tunnel through the mobile network's infrastructure with its radio access antennas within that tunnel. Likewise examples hold for any subway-system in the world, for example the EURO-tunnel which has approx. 50 km in length (of which 38 km. are under the sea).

Especially in calamities using such location method can speed-up the help efforts and the retrieval of casualties, as the accuracy in position determination comes close to the position-determination of a satellite system as described above with respect to Figures 1 to 3. The tolerances in position can be reduced down to the centimetre or even millimeter range. And all this can be achieved with the smallest margin in budget on hard- and software in comparison to the described satellite-based systems, as most of the required components are already in an operational status at cellular networks.

A further advantage is that failures in the communication system can be repaired more quickly due of the absence of satellite-based positioning components. For failures in the radio transmission mostly people and not machines are needed to solve any deficit. To solve any failure, system-parameter, recent measurements and experience-values of the people with experience and knowledge in this field are needed to come to a relative fast and efficient resolution. But due to an ever increasing complexity of the cellular communication-systems and in newer techniques the finding-, identifying- and resolving of failures is getting more time-consuming, elaborate and thus costly. As a result for instance the interdependence of the various parameter, failures and measurements need to be considered. As a result any cellular network operator should monitor his cellular antennas on the before mentioned items constantly and in full extend. When applying the method described above, complexity of the system is reduced and thus failures can be found with reduced effort.

## BRIEF DESCRIPTION OF THE DRAWINGS

Further embodiments of the invention will be described with respect to the following figures, in which:

Fig. 1 shows a schematic diagram illustrating a satellite-based positioning system 100 such as the Global Positioning System (GPS) and an exemplary division of satellites around the orbit of our globe;

Fig. 2 shows a schematic diagram illustrating a geographical area 200 measured by the satellite-based positioning system 100 depicted in Figure 1 and exemplary time delays of three satellite signals;

Fig. 3 shows a schematic diagram illustrating a Global Positioning System (GPS) 300 in cooperation with a cellular network to provide the position of a mobile device;

Fig. 4 shows a schematic diagram illustrating the general arrangement of UE positioning architecture 400 in UTRAN according to 3GPP TS 25.305;

Fig. 5 shows a schematic diagram illustrating a method 500 for locating a mobile station resp. handset within a mobile cellular network according to an implementation form;

Fig. 6 shows a schematic diagram illustrating a radio network 600 according to an implementation form;

Fig. 7 shows a geographical map 700 illustrating exemplary transmission path losses due to dampening and reflections in a radio network according to an implementation form;

Fig. 8 shows a geographical map 800 illustrating a top-view of an exemplary signal's de- and reflections in a mobile-terminated transmission towards a user with UE as a path attenuation;

Fig. 9 shows a schematic diagram illustrating a top-view of an exemplary physical build-up of a cellular network antenna 900 with exemplary three proportional 120°-angled coverage segments of each antenna;

Fig. 10a shows a schematic diagram illustrating a top-view on an exemplary configuration of a part of a cellular network 1000a;

Fig. 10b shows a schematic diagram illustrating an exemplary map 1000b including distances between the three base stations of the cellular network 1000a of Fig. 10a and a mobile terminal;

Fig. 11 shows a schematic diagram illustrating an exemplary arrangement 1100 of three sphere centers for determining the location of a mobile terminal according to an implementation form;

Fig. 12 shows a schematic diagram illustrating a communication system 1200 according to a Massive MIMO-technique with phased array antennas for determining the location of a mobile terminal according to an implementation form;

Fig. 13 shows a schematic diagram illustrating a communication system 1300 according to a Massive MIMO-technique with phased array antennas according to 5G for determining the location of a mobile terminal according to an implementation form;

Fig. 14 shows a schematic diagram 1400 illustrating different antenna systems (SISO 1400a, SIMO 1400b, MISO 1400c and MIMO 1400d) and the independent phasing of a MIMO antenna for determining the location of a mobile terminal according to an implementation form;

Fig. 15 shows a top view 1500a and a side view 1500b of a geographical area illustrating location determination through a connectivity to multiple antennas according to an implementation form; and

Fig. 16 shows a sphere 1600 with various angles between the x, y and z legs for illustrating the determination of a location of a mobile terminal according to an implementation form.

DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following description, methods and devices for locating a mobile station resp. handset within a mobile cellular network are described. The described devices and systems may include integrated circuits and/or passives and may be manufactured according to various technologies. For example, the circuits may include logic integrated circuits, analog integrated circuits, mixed signal integrated circuits, optical circuits, memory circuits and/or integrated passives.

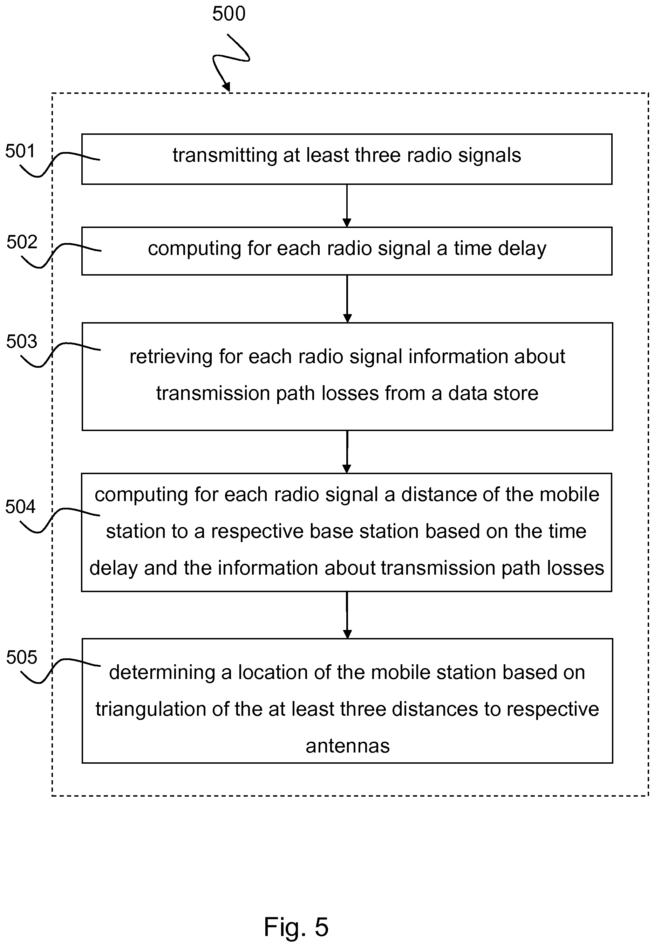

Fig. 5 shows a schematic diagram illustrating a method 500 for locating a mobile station resp. handset within a mobile cellular network according to an implementation form.

The method 500 includes the following steps: transmitting 501 at least three radio signals between the mobile station and a corresponding number of at least three base stations, wherein each of the at least three radio signals comprises a time information indicating a transmittal time of the respective radio signal; computing 502 for each of the at least three radio signals a time delay based on a difference between an arrival time and the transmittal time of the respective radio signal; retrieving 503 for each of the at least three radio signals information about transmission path losses of the respective radio signal from a data storage; computing 504 for each of the at least three radio signals a distance of the mobile station to the respective base station based on the time delay and the information about transmission path losses; and determining 505 a location of the mobile station based on trilateration of the at least three distances. The information about transmission path losses may be stored as a correction matrix in the data storage.

The method 500 may further include: computing a coarse distance of the mobile station to the respective base station based on the computed time delay and the speed of light; and refining the computing of the distance of the mobile station to the respective base station by applying the correction matrix to the coarse distance.

The method 500 may further include: updating the correction matrix based on at least one of the following events: internal events occurring within the mobile cellular network, external events occurring in an antenna coverage region of the mobile station and the respective base station, and static events in a geographical region of the mobile station and the respective base station.

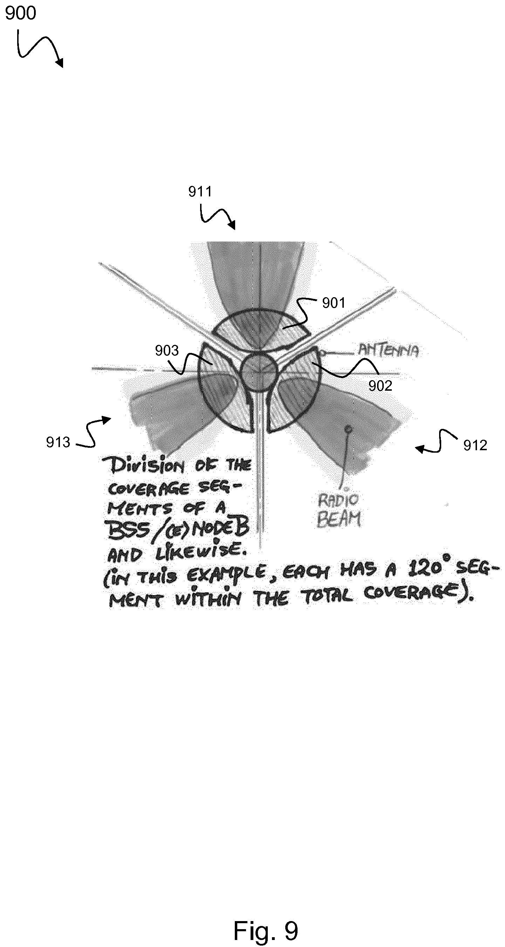

The internal events within the mobile cellular network may be related to at least one of: access latency, delays, disturbances, error detection and correction, interferences as described below with respect to Figure 9.

The external events may be related to changes of at least one of the following parameters: attenuation-loss parameters, channel characteristics, electronic field within air layer, loss-of-signal, temperature, humidity, motion and angle of transmission.

The static events may be related to changes in the statics of a coverage area of a single antenna of the mobile station or the corresponding base station. These changes may include at least one of the following: antenna height, antenna position, antenna descent, antenna elevation, objects within a coverage area of the antenna, height and width sizes of the objects, specific angles of the objects with respect to altitude, latitude and longitude to the antenna, material on a facade towards the antenna, reflection areas of the objects, materials of the objects.

The method 500 may further include: deriving a direct transmission path between the mobile station and the respective base station from the static information.

Transmitting the at least three radio signals may be mobile-originated or mobile-terminated.

The information about transmission path losses of the respective radio signal may include a transmitting antenna identifier and an atomic clock reference time.

The data storage may be located in a base station controller (BSC) or a radio network controller (RNC) configured to control the respective base station.

The method 500 may further include: evaluating the information about transmission path losses based on the following formula: $L = 20 \cdot \log_{10}(4 \cdot \pi d)/\lambda$, where $L$ is a path loss in dB of the respective transmission path, $d$ is a distance of the respective transmission path and $\lambda$ is a wavelength of the respective radio signal.

The method 500 may compute 502 the time delay for example based on location-based services as described above in the example of UTRAN, see figure 4. The time delay may be computed depending on the enhanced cell-ID, the Observed Time Difference of Arrival (OTDOA) and the Uplink - Time Difference of Arrival (U-TDOA), or equal methods.

The basis remains the triangulation or trilateration of an entity, from preferably at least three antennas, where the delaying times of arrival or reception determine the required position. All antennas which have the entity in sight are able to e. g. perform their own network induced location request (NI-LR) or to reply to mobile originating location requests (MO-LR) from customers entities, i.e. mobile terminals. The advantage in having more than three antennas with an entity "in sight" is that three are needed to perform the actual trilateration respectively triangulation and every antenna on top of those three can be used to reduce the tolerances within this method, as by the additional antenna(-s) any inconsistencies in the re-calculated times can be traced and corrected.

The enhancement is formed by a matrix in which for instance the variables within the trajectory of each signaling are kept and if possible reduced to various ranges (for example in rural areas without any dampening factors for the signaling). Any variable which has an influence or a possible influence on a radio signaling transmission over the air is preferably included in the before mentioned matrix.

There are various losses (in both performance and quality) to be dealt with in radio transmissions. There are losses which have a greater effect and those with a lesser effect on any radio transmission. Any loss raises the potential of delays and an inexactness of a signaling and herewith of the ability of a cellular network to use its potential ability and performance to challenge a GPS-like system in e. g. a location determination precision.

An example with a minimal effect, as the loss-quantum is very small in comparison, is the dissipation, i.e. measure of loss-rate of electrical potential energy in a radio transmission. Examples of a likely higher loss-quantum are those who (can) raise the resistance in a radio transmission, such as for instance an attenuation or extinction, i.e. gradual loss in intensity of any kind of flux through a medium. A path attenuation is also known as path loss, an air humidity or air vapour and/or ionization, i.e. magnetism causes.

The parameters with a higher loss-quantum in strength and quality within a radio signaling can be used by the correction matrix to raise a cellular network's ability to get a more precise location determination, in particular if a satellite positioning system (GPS) is due to circumstances not available anymore to a customer of the mobile network.

The method described here differs to a position-determination in more recently updated network structures through the possible neglect of a satellite positioning system to come to very precise position-determinations of the various UE operated by the network's customers within that network. The satellite positioning system may be used to acquire the exact positions of the base stations. However this can be performed once at installation of the base stations. By using the positions of the base stations, the exact location of the mobile terminal can be computed. However there is no need to use the satellite signals for providing the coordinates of the mobile station to the mobile station.

The method 500 may rely on various Radio Access Network (RAN)-systems having a connectivity with computer centers for its calculations and computations. Hence, an increased computing power may be exploited that may provide a mesh-connectivity of the current island-like implementations of the separate RAN-infrastructures within the cellular network.

The need for the computing power is increased by the matrix, in which all corrective values are listed to each trajectory, as for instance charged particles and/or water vapour and even drops in the air will reduce a transmission's velocity.

Charged particles are a fast growing phenomenon in the electronic-, electric- and magnetic world, *with no end to it's still continuing growth in sight,* as even more products with for instance plasma treated coatings will be produced for industrial usages and private customer products, or also neon lighting (gas-discharged) is a known example within this very large ionic group. Charged particles as such are a normal entity in the atmosphere. Considering the effects of charged particles in the correction matrix improves the accuracy of the location determination method 500.

Water vapor, *or in other words the gaseous phase of water,* is continuously generated by evaporation. Water drops can even be seen in the form of for instance a cloud, a fog or a mist. Especially the evaporation of water (water is a liquid state) and the sublimation of even ice (ice is a solid state) result in a certain level of humidity in all natural environments of the world. As such we're also here facing a growing phenomenon, as only for instance cooking and energy production are mostly based on the use of water vapor respectively steam. With an always growing world population the humidity will surely rise in not just the relevant growth regions of the world's population. Also the growing pollution has a strong influence on occurring evaporation of water, as for instance the global average temperature *-as one of the various occurring energy inputs which favor an occurring evaporation-* rises continuously.

Water vapor and/or drops are normal entities in the lower troposphere layer of the atmosphere. In a direct sense water vapor has also a participation in the occurrence of for instance thunderstorms with lightning. The amount of water vapor directly controls the permittivity of the air. Permittivity and capacitance work hand in hand to produce the megawatt outputs of lightning. Also the occurrence of thunderstorms with lightning are growing as a result of the climate changes. Considering the effects of water vapor and/or drops in the correction matrix improves the accuracy of the location determination method 500.

The basis for any calculations and computations is provided by the (various) BSCs respectively (S)RNCs of nowadays cellular networks. These obtain the relevant data to e.g. channel characteristics and/or interferences from their subsequent BSS/(e)Node Bs or to be more specific the appropriate antenna of the antenna station. An evolved calculation- and computing task of RAN-node elements by using this method 500 may be relocated in a computer center for the relevant tasks.

A correction matrix according to the method 500, which is also updated by all possibly performed transmissions, may enable cellular network operators to determine exact locations in nearly the same class as very expensive satellite navigational systems do, as the correction matrix includes all data that is detected from and during the performed transmissions of its antenna. The correction matrix holds the transmission loss data and allows to improve estimation of distances based on the radio transmission.

A respective correction matrix may be assigned to each single antenna to keep all values of for instance the internal, external and geographical dependencies within its coverage. The use of the correction matrix implies an increased computing ability in comparison to the nowadays provided abilities. For the needed calculating and computing a dedicated computer centre may take over the before mentioned tasks of nodes within the RAN. The appropriate matrix-values from each relevant antenna may be transmitted to a UE with the antenna-ID, exact coordinates of the antenna and the actual time-stamp.

To get a uniformly and very precise time calibration and correction in all network elements and with that also in the Radio Access Network (RAN)-systems, as e. g. BSS, NodeB and/or likewise, in particular an access to an atomic clock-system may be implemented to achieve the required synchronization and precision.

This exact time may be relayed to the network elements in particular either through the fiber network wiring, or each network element may be equipped with an antenna to receive the transmitted atomic clock-time. The transmitted time-signals may have a very high precision, as their accuracy is within the nano-second [ns] respectively the billionth second range (i.e. 0,000000001 respectively 1 x 10$^{-9}$ of a second; in the short *or American* scale). As such a transmission over a distance of e. g. 300.000 meters may result a delay of just an approximate millisecond ($\approx$ 1 ms. and thus $\approx$ 0,001 s.).

With this many advantages can be realized, as within a location-determination in for instances a building, under a foliage, in tunnels, in subway-systems or just during a non-or not sufficient coverage by the minimally needed GPS-satellites is given, any kind of assistance or service can be provided by the cellular network itself, thus independent of any *third party,* as GPS is. During calamities or likewise the value of this method 500 becomes very big and true.

Furthermore, the entire development as well as the precision is in the hand of the cellular network's operator, as he/she buys the needed hardware, tooling, makes his decisions and becomes in this respect fully free of any alterations, migrations, modernisations and/or even replacements to any satellite-based positioning system.

Every mobile network may have a coverage up to a certain ceiling, i.e. vertical direction respectively lateral, superior or transversal and out in the surrounding, i.e. horizontal direction respectively anterior or longitude.

Together with a geographical acquisition within the coverage of each antenna, based on measured values which may come from e. g. land registry offices (assessment of a land's dimensions), a database knows the position in space within its coverage and the geographical changes respectively -features in gradients of rising or descent within a certain proximity both in agricultural-, commercial-, forestal-, industrial-, residential-, consistent of the land (e. g. desert, marshland, permafrost-overlaid tundra, rock, swamp, etc.) and the surroundings.

The here before mentioned features may have, as a geographical feature set, a direct influence on broadcasting characteristics of a radio signalling and is / or are parameters in the here mentioned correction matrix of an antenna. The geographical feature set in the matrix may describe as a parameter the occurring changes and possible changes in the reflection and/or dilutions of a radio signalling towards a receiver / target.

Using a UE within the coverage of a cellular network, a position within at least the three cells of each a different BSS/(e)NodeB/cellular antenna substation may apply (the expected measurements of signals from one or more signal sources) for the mobile device on the basis of a trilateration of such a position. This is the basic determination-method of a location within a coverage of antennas. With a quantum of even more than three cells of different BSS/(e)NodeB/cellular antenna substation any differences within the runtime determination for a location determination on the basis of the trilateration of such a position may be checked and through this defined by the ones in excess of the three needed antennas.

For the enhanced location-determination by a cellular network the allocation over the available (and visible) mobile radio access subsystem-antennas of the cellular network may be performed on the basis that a signal sources satisfies an entrance threshold and from this point on provides the connectivity to the UE.

Transitions of signalling sources to provide the signalling to the UE, are decided on the level of the appropriate threshold of the signalling source. Exceed a threshold's value of an antenna the threshold value of yet another signal source, a transition to the subsystem with the higher threshold may be conducted. To this the regular control over the transmission modalities may be performed, in which each antenna controls the strength of the signalling and thus the optimal provision of internet-, signalling and/or voice channelling. From these the best subsystem-antenna may be selected on the basis of the threshold values of each antenna by the BSC for the connectivity of the UE at its specific venue to the cellular network. All visible antennas may "see" the UE and may check the connectivity. The BSC may determine which antenna of the various antennas is the best and may be used for getting the connectivity established. Over this BSS/BSC-couple the UE may acquire a determination of its position, if required or induced (as a push message transfer).

Variables may be defined in a very broad spectrum, of anything which could alter the pre-set correction values, ranging from for instance dust to snow-flakes over to passing trucks with for instance aluminium-hooded trailers. An occurring dust-storm and its concentration may be calculated on for instance the wind strength, the humidity and a temperature, as may be detected by the antenna which covers the area on the basis of the use of a here before named barometric pressure-, hygrometer and/or thermometric sensor of the network's antenna and the refrain of a humidity over a certain threshold, as the surrounding is specifically dry, e.g. as tundra and deserts can be.

Due to a pre-set interval for the values in the correction matrix, no shortly occurring chances may resume a new calculation, in dependence to a velocity of the UE within the area of coverage. Meaning that all available parameter and corrections do remain, as for instance a user with his UE is a pedestrian in the antenna's area of coverage and his signalling path is (shortly) altered due to the interruption caused by e. g. a passing vehicle. Directly after the vehicle passed the equal correction as before may be *-in most cases-*appropriate, unless the signalling path in that specific venue requires an all new signalling path.

Especially in urban cities or even rural surroundings, in which buildings or hills / mountains / woods may cause very many reflections respectively dampening in the signalling path und thus strength, the matrices of antennas may hold more correction values in such surroundings.

Interferences on a radio channel and/or dilution of such may be caused by e. g. multipath distortion, planetary boundary layer influences in the troposphere, weather, (air) contamination and signal arrival's accuracy. Although the last is named so in the GPS-signalling, it also exists in any regular radio signalling, for as far as its development headed for and reached a higher accuracy.

By comparing the rising and trailing edges in a bit transition, modern electronics can measure a signal offset to within about one percent of a bit pulse width, [0,01 / (1,023 x $10^6$/s)≈], or approximately 10 nanoseconds. Since radio signals propagate at the speed of light, this represents an error of about 3 meters to an actual location. With even higher chiprate signalling these software-based outcomes can even be improved even further, but a higher computing power for BSS / (e)nodeB or any other antenna solution is a corner stone on which a position accuracy can be improved by using the higher-chiprate in the signal acquisition of in-this-case just a cellular network system.

Path attenuation in for instance the network's signalling is the path loss and this also includes the occurrence in a reduction of power density of an electromagnetic wave, as it propagates through space. Path loss is used in wireless communications in the signal propagation. Path loss may be due to many effects, such as free-space loss, refraction, diffraction, reflection, aperture-medium coupling loss and absorption. Path loss is also influenced by terrain contours, environment (urban or rural, vegetation and foliage), propagation medium (: dry or moist air), the distance between the transmitter and the receiver, and the height and location of e. g. the cellular network's antennas. Considering these effects of path losses in the correction matrix improves the accuracy of the location determination method 500.

The earlier mentioned raise in the computing power of an antenna is the true way to get almost equal results in position-determination by the cellular network company without the use of GPS. The more precise the outset, the more precise its results will be.

An independence towards- or having a redundancy for GPS, may be a favourable way to provide the own customers a true optimum, especially as such a trait by the cellular network company can bring in extra revenues especially for e. g. certain M2M-scenarios or possible other from GPS-signal isolated circumstances, as also a volcanic eruption can "black-out" entire continents for the earlier named GPS-signals.

With this, also elementary features within that specific space on land are known, as for instance a green pasture, or a piece of forest, or an agricultural area will have an higher air humidity than for instance any urban surrounding further away from the coast will have. An industrial surrounding will know for instance concrete-, steel- and/or glass-facade structures. As such every geographical entity, with for instance sand dunes, mountain-ranges, agricultural-, oil- or steel industry will know its own specific dampening-, reflection- and other values which dam and/or delay radio transmissions within a cellular network.

Considering the features in the correction matrix improves the accuracy of the location determination method 500.

As such any elementary feature to radio transmissions within a specific regional space may be held within the master (correction) matrix of each antenna. In this any instance has a certain coded compilation to each angle on which a transmission left- or arrived on an antenna. A coded compilation may be necessary to ensure the unique compilation on that trajectory isn't to be read, but only handled by an UE in that specific network. As such a coded compilation may be transmitted on two prerequisites only:

The mobile station may be logged-in on the network and within the range of at least a single, but preferably of three (or more) base stations which control an antenna within which coverage the mobile station resides; and the mobile station may receive or have initiated a transmission, as a customer, with the UE.

In the receiving case the mobile station may be in sight of various cellular network's antennas, which send the mobile station e. g. their subsequent antenna-ID and the exact time in which the transmission was sent. The delay in this may be defined by the difference in the exact time the signals were sent to the exact time the signals were received.

From this, the UE may have the various data with their appropriate delays available and can compute its own position from the before mentioned antennas. Preferably three or more antennas have the UE in its coverage, to be able to perform a trilateration. With a fourth or even more antennas who cover the area in which a user with his UE is located an enhanced, if needed, correction of the position determination becomes an option, as all antennas over the minimally needed three antennas can make it a UE possible to perform a correction if one of the received subtractions of the antenna-times of the subsequent signalling was transmitted from the time it was received, as the positions of every single antenna are very precisely fixed.

In the transmitting case the UE may receive the positioning data through the data (i.e. positioning and time-lapse from an antenna) of the antennas in which coverage the UE resides. The UE may send a MO-LR to receive the relevant coordinates from the cellular network in a reply over the antenna which is responsible for its connectivity.

The coded compilation may be calculated on the trajectory of the transmission, based on the geographic entities within that region, with as an addition of dampening-, reflection- and other values which cause the occurring delay in the transmission.

As a UE or mobile station, respectively receives the antenna exact positions and their relevant delays in transmission, the UE can correct its distance to each antenna, through the transferred coded compilation of the used trajectory of transmission.

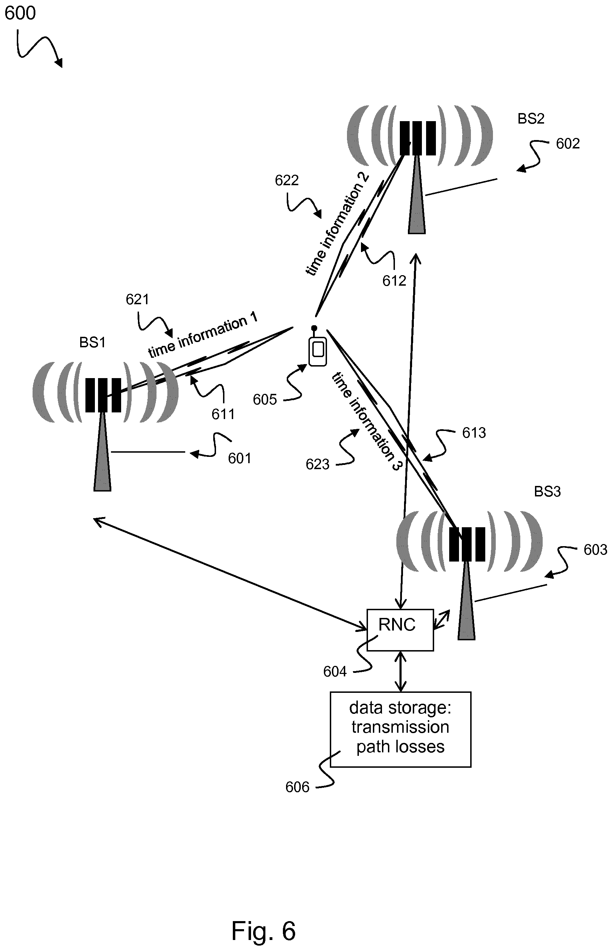

Fig. 6 shows a schematic diagram illustrating a radio network 600 according to an implementation form. The radio network 600 includes at least three base stations 601, 602, 603 and a radio network controller 604.

The radio network controller 604 initiates transmitting at least three radio signals 611, 612, 613 between a mobile station resp. handset 605 within a coverage of the radio network 600 and a corresponding number of the at least three base stations 601, 602, 603. Each of the at least three radio signals 611, 612, 613 includes a time information 621, 622, 623 indicating a transmittal time of the respective radio signal 611, 612, 613, e.g. based on an atomic reference clock.

The radio network controller 604 further computes for each of the at least three radio signals 611, 612, 613 a time delay based on a difference between an arrival time and the transmittal time of the respective radio signal 611, 612, 613. The radio network controller 604 retrieves for each of the at least three radio signals 611, 612, 613 information about transmission path losses of the respective radio signal from a data storage 606. The radio network controller 604 further computes for each of the at least three radio signals 611, 612, 613 a distance of the mobile station 605 to the respective base station 601, 602, 603 based on the time delay and the information about transmission path losses. The radio network controller 604 determines or computes a location of the mobile station 605 based on trilateration of the at least three distances.

Each base station 601, 602, 603 may include a plurality of antennas, e.g. according to a Massive MIMO system as described below. The information about transmission path losses related to a specific antenna of a base station may be stored in a data storage 606 assigned to the specific antenna of the base station 601, 602, 603.

The data storage 606 is used for storing information about transmission path losses. The data storage includes a non-transitory computer-readable medium including a plurality of data stores addressable by an identifier of a mobile station 605 and an identifier of a base station 601, 602, 603. Each data store stores information about transmission path losses of a radio signal transmission 611, 612, 613 between the base station 601, 602, 603 and the mobile station 605.

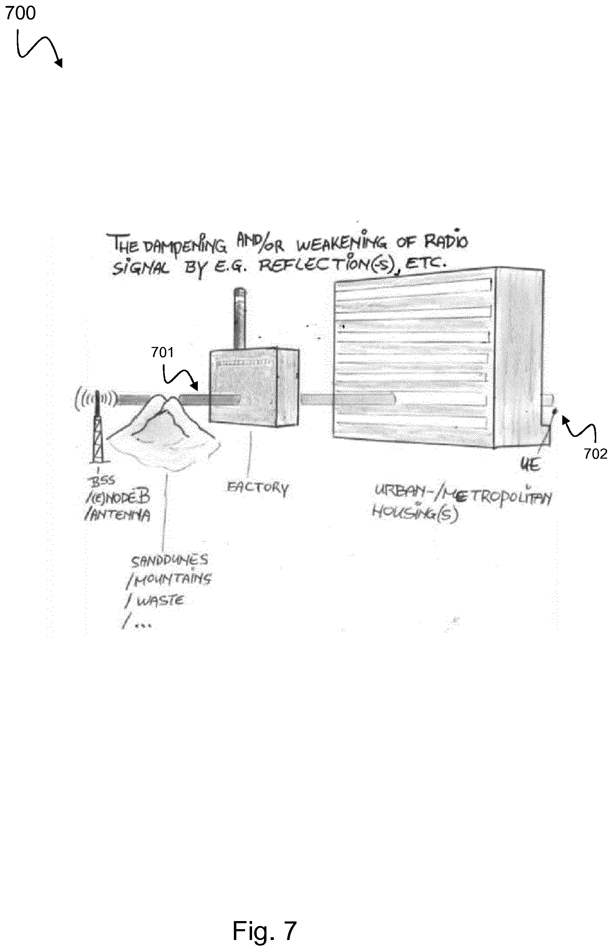

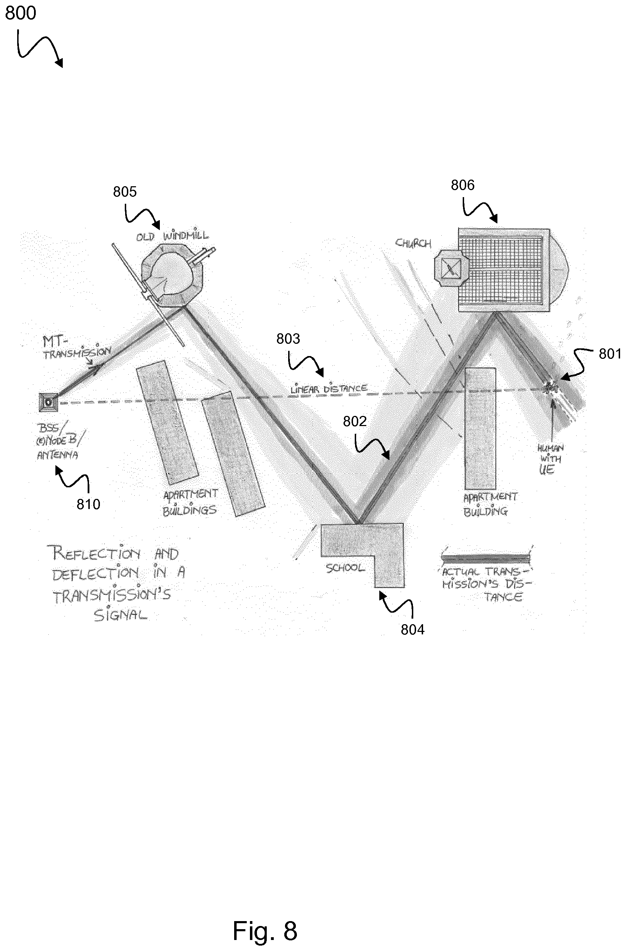

Fig. 7 shows a geographical map 700 illustrating exemplary transmission path losses due to dampening and reflections in a radio network according to an implementation form. The beam 701 that reaches a UE 702 is mostly reflected in various ways, as materials like steel and/or concrete don't transmit radio waves, as desired. The wave strength of the beam 701 is weakened and/or dampened until it reaches the UE 702. The radio beam 701 that reaches the UE 702 in such an example has not direct path towards the UE 702, but may reach the UE 702 over an entire different trajectory through (various) reflections, e.g. as shown below with respect to Figure 8.

Interferences on a radio channel and/or dilution of such may be caused by e. g. multipath distortion, planetary boundary layer influences in the troposphere, weather, (air) contamination and signal arrival's accuracy. Each antenna may hold its own antenna-specific master-(correction) matrix, in which transmission-angles and all relevant trajectories to these may be kept. To each single trajectory all relevant geographic uniquenesses within the trajectory may be listed, with their relevant contribution in causing a delay.

To all relevant (and measured) points on the trajectory of a transmission the occurring attenuation losses, as in dampening, interference and equal effects may be listed to the trajectory, which may have an influence on a transmission. These may be in the coded compilation of the relevant transmitted values, for the UE to compute the needed correction on its position.

Fig. 8 shows a geographical map 800 illustrating a top-view of an exemplary signal's de- and reflections in a mobile-terminated transmission towards a user with UE 801 as a path attenuation. The top-view drawing shows exemplary signal's 802 de- and reflections in a MT-transmission towards a user with UE 801, as a path attenuation. Note the differences in length of the linear distance to the actual length of the transmission's path. The signal radiated by a transmitter may also travel along many and different paths to a receiver simultaneously; this effect is called multipath.

Not independent from a user with UE-position there are various delays which may occur. Just moving in a slightest way side-, for- or backwards may result in different transmission paths even when using the direct "line of sight" path 803. These multipath transmissions depend on the surrounding. Due to e. g. the attenuation delay, caused by for instance a resonance, the humidity, the de- and reflection of also the spreading of the beam of transmission over a distance the so-called dispersion of a beam, the beam's trajectory can easily exceed in length the shortest-possible path of transmission without any disturbances in the form of e. g. buildings, hills, mountains, woods, etc. (which is the so called "crow's flight" or the linear distance). In such an environment also a multi-path in the signalling to the receiver be it either the customer's UE or the cellular network's antenna can establish itself during a transmission.

As a transmission's beam length through for instance occurring reflections exceeds its linear distance, a delay may occur to the transmission and thus to its time. Further attenuation influences on the transmission may further increase the dampening of the radio signal in a wireless transmission and thus rise the occurring delay-time. In Figure 8 an example of the different lengths in the linear distance 803 to the actual transmission path's length can be recognized.

Due to the de- and reflections of a transmission beam 802 towards its destination (the human with the destination-UE 801), many side-effects occur as well as the effective reflection on building-walls 804, 805, 806, facades, etc. from an antenna 810 (in the left of the picture) to a UE 801 (in the far right of the same picture). The before mentioned effective reflection, within the attenuation delay, will cause an almost doubled path-length 802 in comparison to the linear distance 803, in this example, due to the angle of reflection achieved by the transmitted beam 802 on its way to the UE 801. As the dispersion of the transmission radio beam 802 grows by also the quantum of needed reflections, the dampening of the radio signal rises accordingly.

Due to the occurring dampening of the radio signal and the emerging delay in the transmission, a new option for determining the path losses arises.

As the earlier mentioned barometric pressure-, a hygrometer and/or thermometric sensor of the network's antenna, as well as e.g. an ionization detector, are just a couple of path attenuations of the multiple corner stones in gathering the various variables which also influence a radio signalling during a transmission. The four named sensors cover the primary detection-availability of occurrences in the atmosphere.

One knows the view of the shimmering (and rising) hot air above land, as the sun "burns" on the soil. In such a climate you wouldn't be able to anticipate or judge right, as you haven't a strong notion on size, distance, or likewise. The occurring dilution which shows itself in mostly shivering (and rising) optical waves, is based on heat and drought, with often influences of occurring air flows respectively mild winds. Another very important influence-feature are the electronic fields, which occur. Instead of an occurrence under pure dry occasions, these may also occur in the atmosphere under thunderstorms.

In all climatologically conditions so called electrical fields are existent or induced, which become deflection-hazards to a cellular network's radio signalling. Such a phenomenon may last 24 hours each day, depending on e. g. the strength of the electronic fields in the atmosphere, the humidity and the heat in the air.

As with most (variable) occurrences, a default for any single value may be used which may be captured (in an automated fashion, as long as the way to achieve a value is known or even a standard) and held in the correction matrix. Thus the correction matrix may hold parameters, which provide the e. g. default-values of air-pressure, humidity, temperature with an interlinking to strengths of any possible electronic fields in for instance thunderstorm-conditions.

Reflection, as a part of the total attenuation losses, also caused by for instance geographic and/or built entities, is another one within the group of attenuation losses which may occur. Various variables may be used to determine the reflection and through this the occurring delay, as for instance: the angle (of a side of a building/mountain), the material causing the reflection (and its own attenuation respectively dampening) and so forth.

Fig. 9 shows a schematic diagram illustrating a top-view of an exemplary physical build-up of a cellular network antenna 900 with exemplary three proportional 120°-angled coverage segments of each antenna.

Through a request such as-, or similar to-, a Mobile Originating Location Request (MO-LR; according to 3GPP TS 32.271) that is sent to all visible respectively reachable antennas on each base station system (BSS), (evolved)NodeB or future mobile network's antenna-solutions for this purpose, the antennas can request the location of a specific UE, Network Induced Location Request (NI-LR; 3GPP TS 32.271) and/or Mobile Terminating Location Request (MT-LR; 3GPP TS 32.271).

As an example a request from an UE, e.g. a MO-LR, is handled by each antenna with its base station system which has the appropriate coverage and its accumulated and calculated values within the matrix are sent to the relevant base station controller (BSC) respectively Radio Network Controller (RNC) or a likewise functional future solution.

The exemplary antenna device 900 depicted in Figure 9 includes an exemplary number of three antennas 901, 902, 903 each one having its own coverage area 911, 912, 913.

In all transmissions the actual precise and synchronized (atomic clock) reference time may be included as a pre-set as is the antenna-ID of the transmitting antenna.

In doing the earlier mentioned requests, all antenna values may be corrected towards the actual values through the in-calculation of the relevant matrix values to the specific antenna for reaching UE-targets due to possible "interfering" or dilution (as in path loss) by the e. g. distorting concrete, steel, trees, glass-facades, forest(-s), mountain-sides, sand-dunes, etc. with the further dampening values due to the features of for instance locally explicit air-humidity and/or ionization.

The matrix may as such be able to provide a correction value to any geometric dilution of a required precision. These values may be renewed by data centres, which may update all analysing- and computing tasks for each antenna-matrix. Log books of antennas can be read by an appropriate data centre, as a reference and/or back-up.

The before mentioned matrix values for each single antenna 901, 902, 903 may be stored in a dedicated data base respectively storage of the antenna with a sufficient capacity to behold the entire log books for each successful connectivity from- or to that specific antenna. The log book may include all measurements which may be relevant for the build-up and maintaining of a connectivity, as e. g. the altitude, the azimuth (horizontal angle to the antenna's center; longitude) and the elevation (vertical angle to the antenna; latitude) describing the initial direction of a transmission leaving the antenna, c(arrier)/n(oise)-value for the quality of the signal, code phase measurement of- and occurring Doppler-effects in the mobile radio link of a transmission and other dilution occurrences in a position-determination. It thus also may behold the system supervision, disruption and fault diagnostics, with a record on the achieved noise immunity and thus a noise monitoring.

For setting up a correction matrix, three main groups may be determined, in which a cross-link between the parameters may be given. A first group are internal events, which may occur within the cellular network, its nodes and specifically in the antenna. A second group are external events, which may occur in the region within the antenna coverage. A third group are geographical dependant and thus static events, such as buildings, dunes, factories, hills, mountains, woods, etc.

To the signalling itself it may include the so-called internal events, which may be e. g. an occurring access latency, the delays occurring, (internal) disturbances, error detection and correction, interferences and likewise.

Examples of the external events -as a further variable- in a communication may be defined as a disturbance occurring for instance due to a change in the attenuation loss-parameters, the channel characteristics, an upcoming of-, or alteration in an electronic field within the air layer of the occurring transmission, interference resp. interruption or loss-of-signal, heat/cold (/temperature), humidity, motion (causing for instance a possibly changing angle of transmission, which could also occur due to for instance a passing car ...), their frequency and duration, etc.

The geographical events may include the entire statics within a coverage-area of the single antenna, with height differences, eventually as (a) descent(-s) or (an) elevation(-s) in the surrounding resp. covered area of- and to the height of the antenna (from an in line-of-sight perspective), with all the here afterwards specified features to the position and height of the antenna. The various objects within this area with their specific characteristics, as with buildings these could be for instance the height- and width sizes of the constructions and their specific angle, as in altitude, latitude and longitude to the antenna, the material on the facade towards the antenna, as well as possible reflection areas of the construction, the materials specifics (in e. g. default-values for concrete, glass, steel, wood, ...), etc.

All before mentioned events may also behold the so called assistance data (from for instance the estimated positioning of an UE or any used reference antennas).

The (correction) matrix, as a memory within the antenna storage / data base for the specific task, may store communication instructions to facilitate communicating with one or various devices to- or from one or more other UEs in communication with one or more computers respectively one or more servers.

The before mentioned memory may include the internal-, external variables to a connectivity as they occurred, and a (static) geographical instruction for the determination of the signalling path with it possibly reflections or other dampening values of a path loss resp. attenuation loss in the processing of the connectivity.

In all events the for instance electronic messaging-, media-, phone-, sensor processing-, web browsing instructions to facilitate electronic-messaging-, media-, phone-, sensor-, web browsing-related processing and functions may be recorded for each relevant connectivity. Equal transmission paths with identical out-comings in the calculations may be set as a default value for the transmission to which the variables may be calculated. Also security instructions may be added to the earlier facilitated processes and functions, in order to complete the required command sets.

Each of the as an example above identified instructions and applications may correspond to a set of instructions for performing one or more functions described above. These instructions need not be implemented as separate software programs, procedures, or modules.

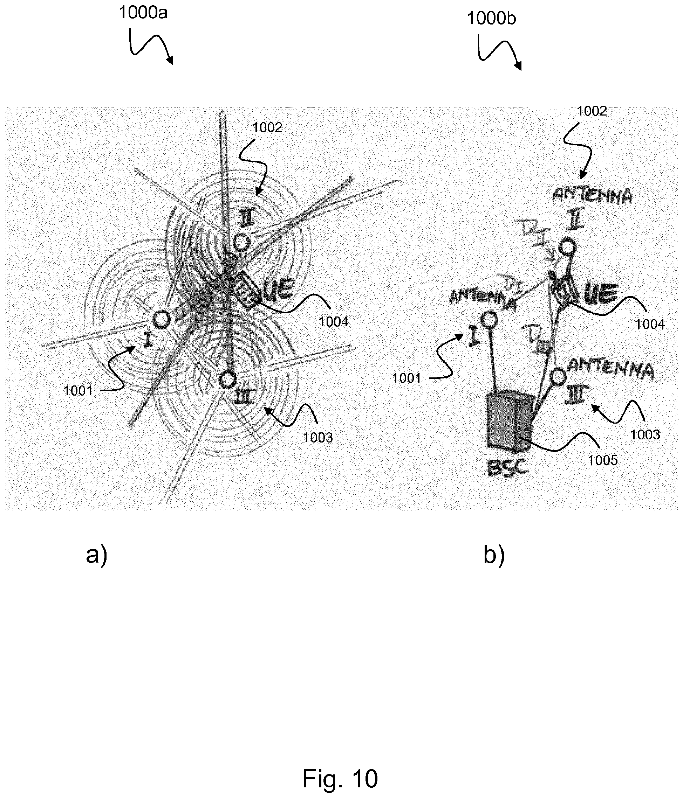

At the BSC all (corrected) antenna values may be calculated to an exact location within the relevant BSS-coverages, e.g. as described below with respect to Figures 10a, 10b.

The same may apply for every (C-/D-/S)RNC and the appropriate (e)Node B, or any future developments in this radio network's direction.

As with radio telescopes also BSS, (evolved)NodeB and other antenna-solutions may have in principal a radio-reflector which mostly may be in a slight conical radient, e.g. as illustrated in Figure 9.

Fig. 10a shows a schematic diagram illustrating a top-view on an exemplary configuration of a part of a cellular network 1000a. The exemplary configuration includes a first base station 1001, a second base station 1002 and a third base station 1003, each base station including an antenna 900 as described above with respect to Figure 9. A UE 1004 is located in a coverage area of the three base stations 1001, 1002, 1003.

Fig. 10b shows a schematic diagram illustrating an exemplary map 1000b including distances between the three base stations 1001, 1002, 1003 of the cellular network 1000a of Fig. 10a and a mobile terminal 1004. The so spanned radio network may correspond to the radio network described above with respect to Figure 5. The so spanned radio network may apply a method 500 for locating the mobile station resp. handset 1004 within the radio network as described above with respect to Figure 5. Based on this method 500, the three distances $D_I$, $D_{II}$ and $D_{III}$ may be computed. By using trilateration based on these distances $D_I$, $D_{II}$ and $D_{III}$ the location of the UE 1004 may be determined.

Through the angle on which for instance a radio signal of a transmission comes, as a return on in this case e. g. a Network Induced Location Request (NI-LR) and/or Mobile Terminating Location Request (MT-LR), to the conical-formed antenna, the direction may be taken.

With the antennas at multiple different antenna-sites, the same multiple directional beam from their own gradient position provides over triangulation, trilateration respectively trigonometry the "cross-haired" location determination respectively crossing lines of position (based on a distance to each antenna).

The corrected values of the transmissions may be calculated against a position-determination, as beam deviation which can occur in a location determination. The corrected values of the transmissions may include a sample location in the venue with its geographical specifics and may include expected measurements of signals from one or more signal sources by a mobile device located at the sample location and the various factors such as possible dust in the air, humidity, rain, etc. which rise the attenuation loss respectively dampening in a radio signal's transmission altogether.

The BSC 1005 may control a multitude of BSS, (evolved)NodeB or future mobile network's antenna-solutions, with an exemplary 120°-beam antenna in each segment of the BTS 1001, 1002, 1003 and may receive their corrected values for the transmission to- and from a specific UE (see E.212-IMSI).

Key values for a transmission may be stored in the correction matrix respectively correction table, from which the service can determine which e. g. climatic- and geographical influences, objects, etc. have what influence on both a transmission and from this on a determination effort to locate a UE.

As such each cell may have its own correction matrix for all kind of transmission's paths from the antenna, with its attenuation loss-parameters for these paths as a correction, which may be used for all its connections to the various located UE. The correction matrix may also be a support to be able to change power-settings on a transmission, as e. g. dampening-, reflection-, etc. values can constantly change.

The correction matrix may constantly be updated by the evolving transmissions between antenna and the logged onto this user equipment (UE). The transmissions may be stored in kind of log-books on a storage, which may relate to all the different of transmission paths, as well as e. g. their length and the corresponding delay which occurred on each single transmission.

A correction matrix may include various static-, but also variable values as illustrated in table 2, where only a fraction of the columns are shown. Due to this the correction matrix may include a greater variety of the relevant static (as for instance angle-, distance-, sizes, material and the dampening factor of transmissions from the antenna) and variable (as for instance barometric-, hygrometric-, thermometric- and ionization values) entities, which can be attenuation loss-parameters in many cases.

Table 2: An exemplary correction matrix

| (specific) humidity average in % | temperature °F | air pressure mmHG | geographical feature | distance mtr | angle face average angle <[in °] | material | dampening factor (x of 100) |
|---|---|---|---|---|---|---|---|
| 44 | 84,2 | 762 | Factory | 126 | 24 | Alloy steel | 87 |
| 45 | 84,1 | 760 | Apartment Building | 1.326 | 39 | Concrete | 91 |
| 45 | 84,1 | 761 | Housing Block I | 1.473 | 35 | Brick stone | 89 |
| 44 | 84,2 | 760 | Office building | 1.853 | 81 | Glass | 99 |
| 45 | 84,1 | 762 | Housing block IV | 2.059 | 11 | Brick stone | 84 |
| 43 | 83,9 | 746 | Mountain | 6.100 | 17 | basalt | 100 |

In the table 2 illustrating an exemplary correction matrix all relevant stable (/ static) -and variable entities may be enclosed. The variables in such a table may have a renewal as threshold values are exceeded or reduced. The static values do not (easily) alter and can remain. In the shown example various values aren't listed as for instance of an altitude and (azimuth- and/or latitude-) angle to the antenna, an antenna-ID, ionization of the environment, sizes (of e. g. structures), etc. to an antenna behind a trajectory with their relevant parameter, various attenuation loss-parameters and-so forth, aren't shown in the example.

From a (segment-) antenna-dependent matrix, a non-transitory computer-readable medium storing instructions operable in which the covered area with its specifics are kept in an antenna-own respectively -specific database in regard to e. g. the accent in the country (descending-, flat- and/or rising-), the specifics to buildings and other constructions, the specifics to the infrastructure and the country side, etc. may be kept to the exact alignment of the antenna-module (i.e. the centreline of the coverage). With this the exact positioning (i.e. location and height of each antenna-module) and direction of its alignment may be known in the network and the basis of each antenna-matrix, which is based upon its view of its surrounding.

The correction matrix of each antenna may include the calculated corrections from which any kind of occurring dampening respectively reflection can be derived. All variables may lead to alterations to the available correction-values within attenuation parameters, such as e. g. air humidity, -pressure, -temperature and/or its ionization potential would cause. To these last for instance a hygrometer, a barometric pressure-, a thermometric sensor and/or an ionization detector of in most cases the network's antenna may detect a change in the air humidity, -pressure, -temperature and/or changes in the ionization of the surrounding, which are indicative of a lower- or higher disturbance in the air or the movement of the mobile device between floors of a building, or up or down another altitude on a slope of a hill.

If various antennas are placed on the equal various BSS, (evolved)NodeB and other antenna-solutions over yet again a multitude of different BSCs of the cellular network, an interconnection -for just this kind of data comparisons- over the MSC resp. MSS, or equal, can be used to bring the relevant matches of data over the protocol together to form a general outcome for the position-determination of a UE within the coverage of this MSC-, MSS- or equal node region of this HPLMN.

The testing of any values of a correction matrix of a BSS, (evolved)NodeB and other antenna-solutions of a cellular network and correcting these, if needed, is a method which may be done in certain intervals. The time-lapse in an interval is either set or depending on recorded changes in a BSS, (evolved)NodeB and other antenna-solutions of a cellular network-coverage.

An interval may be defined on the basis of e. g. air humidity measured by a hygrometer, air pressure measured by a barometric pressure sensor, air temperature by a thermometric sensor, the surroundings, built buildings and their respective type within its transmission-range, required QoS-level on the connectivity and the capabilities of the used UE positioning elements.

The same may apply in the case of a MO-LR by a customer's UE. Here the request may be sent to all reachable antennas and their replies may have included the reference (atomic clock) time, the appropriate antenna-ID and the actual matrix-data for the UE of each of the relevant antennas.

Attenuation-losses may be in relation to for instance an air-humidity, which itself may also be dependant from an air-temperature. Attenuation losses respectively path losses may for example be calculated by using the formula

$$L = 20 \times \log_{10} (4 \times \pi \times d)/\lambda$$

or a similar one, where L is the path loss [in dB], $\pi$ is 3,14159.[no unit], d is the distance and $\lambda$ is the wavelength [both d and $\lambda$ are in the same unit]. dB is defined as $dB = 20 \log_{10} (V2/V1)$ when comparing two signals of an equal / the same kind of waveform.

Accuracies of such location determination are increased by primarily a higher amount of available computing power that is put into an effort to get precise data after the computation for the calculation of specific results.

In mobile networks a multitude of various inaccuracies exists, also to the failing invests on the here above stated, in for instance a UE-position estimate which is calculated by BSC respectively RNC in nowadays networks. For instance the non-static changes in channel characteristics and/or interferences of these have a great influence on the performance of an antenna of any antenna station.

The required position accuracy estimate may be based on once again others, as e. g. a geometric dilution of precision, the needed capabilities of the signal measuring hardware, the effect of multipath propagations and of the timing- and synchronization. Also assistance data, which may include data from the various positioning methods, may be used to increase an accuracy in a positioning determination of the cellular network.

If a Stand Alone Serving Mobile Location Centre (SAS) and a Base Station Controller (BSC) respectively a Serving Radio Network Controller (SRNC) with a Serving Mobile Location Centre (SMLC) are available, the tasks may be submitted as follows:

The Base Station Controller respectively the Serving Radio Network Controller may be responsible for the coordination and control of the UE-positioning. The SRNC may also provide e. g. Controlling Radio Network Controller (CRNC) functionalities in the UE-positioning for the associated antennas and their relevant Location Measurement Units (LMUs).

The Stand Alone Serving Mobile Location Centre may be responsible for the position calculation of an UE, which is a task which may be performed by an SRNC as well.

The Serving Mobile Location Centre (SMLC) may reside in a BSC respectively (S)RNC and may calculate network-based location of mobile stations (handsets). The SMLC may further control several LMUs (Location Measurement Units) which measure radio signals to help finding mobile stations in the area served by the SMLC. It can calculate location using the TA (Timing Advance) method.

A trilateration respectively "cross-haired" location determination, crossing lines of position (LOP), of the UE can be more precise and successful as three or more LOPs provide greater accuracy and confidence, especially if the lines cross at a good ("open") angle to each other.

These inaccuracies may be further reduced, as more computing power is available for the task of position-determination of a UE within a cellular network by its operator on its own, without GPS or likewise media.

Any operator may transfer the positioning operations from his cellular network in a(-n own) data center, where a proportional resource may be held for just the cellular network's own position-determination abilities. Through the calculation and coordination of measured values -which may be done by BSS/(e)NodeB or any other (future) antenna solution in association with a LMU, or singularly by the LMU-, in a much higher resolution and thus more fine-grained with the addition of any additional (correction- or filter-) data, a higher resolution will be (more easily- and at a lower expense) achievable. A BTS or SRNC may acquire such a role in which they handle the requests from the UE or network and enrol the pre-set service by the appropriate data center for further calculation.

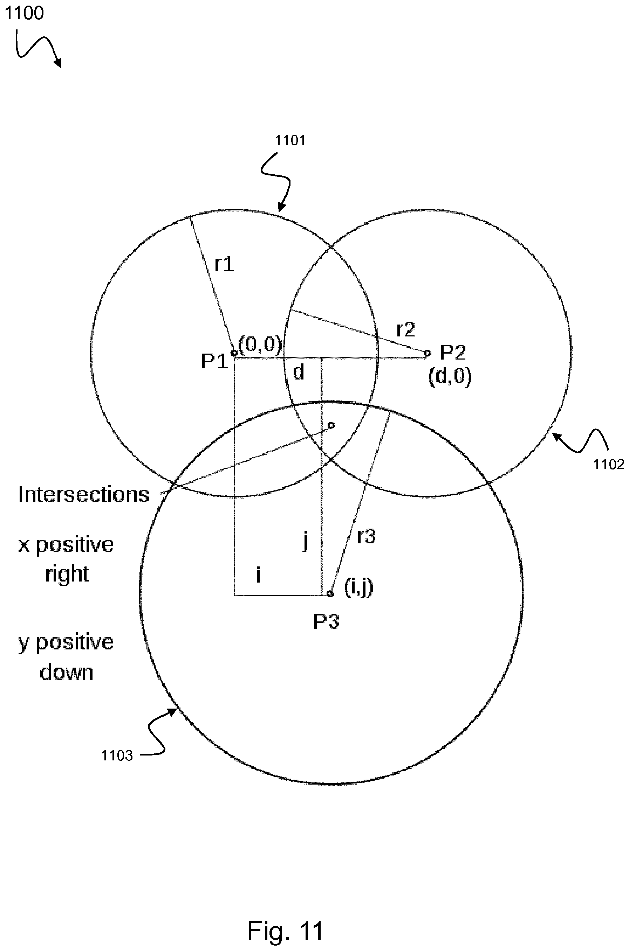

Fig. 11 shows a schematic diagram illustrating an exemplary arrangement 1100 of three spheres 1101, 1102, 1103 for determining the location of a mobile terminal based on trilateration according to an implementation form.

The figure shows the plane z=0 with the three sphere centers, P1, P2, and P3; their x,y-coordinates; and the three sphere radii, r1, r2, and r3. The two intersections of the three sphere surfaces are directly in front and directly behind the point designated intersections in the z=0 plane.

Trilateration is the process of determining absolute or relative locations of points by measurement of distances, using the geometry of circles, spheres or triangles. In two-dimensional geometry, it is known that if a point lies on two circles, then the circle centers and the two radii provide sufficient information to narrow the possible locations down to two. Additional information may narrow the possibilities down to one unique location. In three-dimensional geometry, when it is known that a point lies on the surfaces of three spheres, then the centers of the three spheres along with their radii provide sufficient information to narrow the possible locations down to no more than two (unless the centers lie on a straight line).

The intersections of the surfaces of three spheres are found by formulating the equations for the three sphere surfaces and then solving the three equations for the three unknowns, x, y, and z. To simplify the calculations, the equations are formulated so that the centers of the spheres are on the z=0 plane. Also, the formulation is such that one center is at the origin, and one other is on the x-axis. It is possible to formulate the equations in this manner since any three non-collinear points lie on a unique plane. After finding the solution, it can be transformed back to the original three dimensional Cartesian coordinate system.

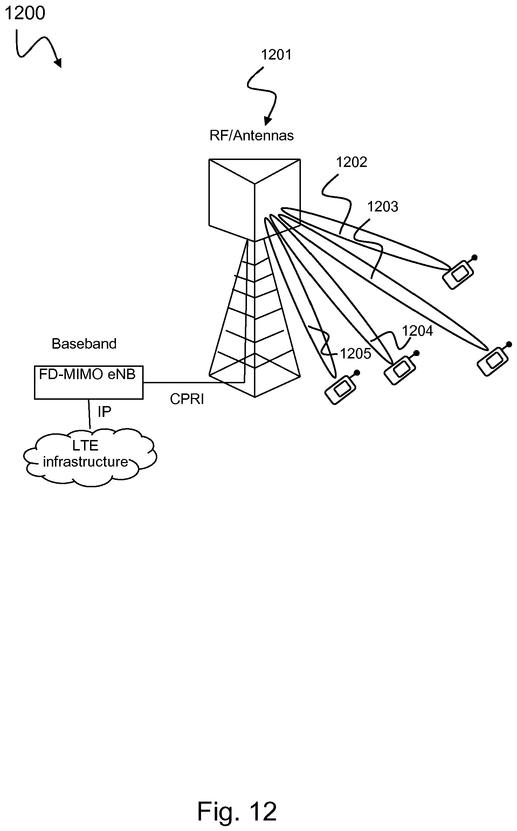

Fig. 12 shows a schematic diagram illustrating a communication system 1200 according to a Massive MIMO-technique with phased array antennas 1201 for determining the location of a mobile terminal according to an implementation form.

As an example phased antenna arrays 1201, resp. active electronically scanned array (AESA) are radar installations on the ground, as well as on ships. Smart antennas, like the spatial domain multiple access (SDMA) system have the ability to steer individual beams 1202, 1203, 1204, 1205 at each user, i.e. mobile terminal. Each array can be electronically set, so its beam 1202, 1203, 1204 and 1205 may have a dedicated direction. The advantage of phased antenna arrays 1201 lies in the ability to engage different targets such as mobile stations at the same time, as each array-sensor is a kind of "tunnelled" view of an entire radar system aboard towards its potential targets. In cellular networks antenna systems each array may be used dedicatedly and thus with an optimum provision of service to the network's user. This is the direction of development of the so called Massive Multiple Input Multiple Output (Massive MIMO) antennas on which e. g. 256 antenna arrays may be placed, which may be controlled by the same amount of (possibly virtual-) controllers.

Fig. 13 shows a schematic diagram illustrating a communication system 1300 according to a Massive MIMO-technique with phased array antennas 1310 according to 5G for determining the location of a mobile terminal 1320 according to an implementation form.

Yet also the control of the phase-direction of a MIMO-antenna 1310 may allow the control over the beam 1301, 1302, 1303 and 1304 of each antenna-segment, which may come in for instance a 2 x 4-mode.

Due to these features, the independently phasing of antennas and the different heights of the segments, a position-location determination may be made depending on the computing-power on one antenna-site (: BSS, (e)NodeB or future antenna-solutions).

When more antenna-sites have an UE "in sight", then their respective height and position are one of the corner stones for a successful trilateration resp. "cross-haired" location determination, crossing lines of position, of the UE. In such a case the computing-power for extracting a very precise location determination may be assumed much lower than in comparison to the location determination by a single MIMO-antenna of the not-enhanced type, as a Massive-MIMO or MU-MIMO is.

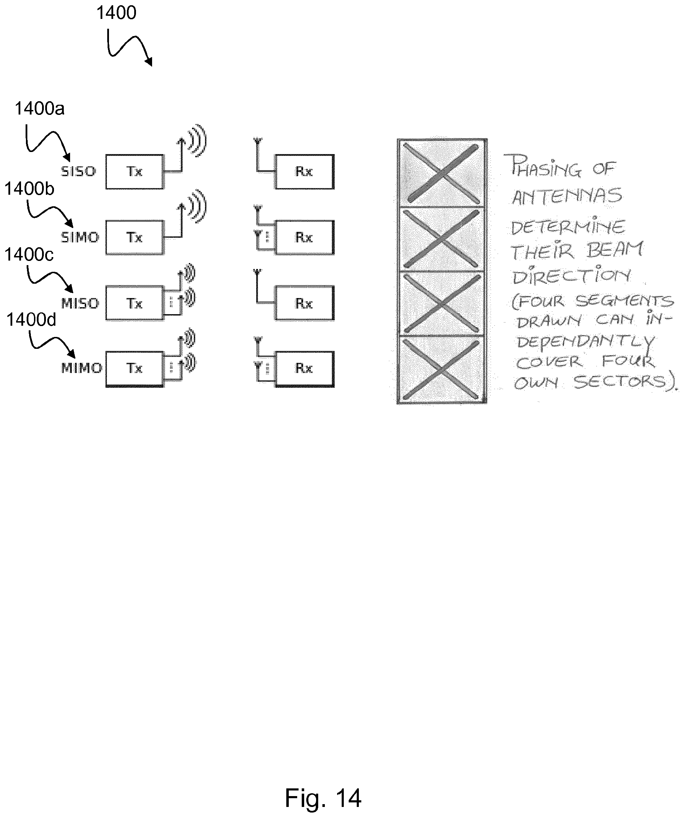

Fig. 14 shows a schematic diagram 1400 illustrating different antenna systems (SISO 1400a, SIMO 1400b, MISO 1400c and MIMO 1400d) and the independent phasing of a MIMO antenna for determining the location of a mobile terminal according to an implementation form.

Phasing of antennas determine their beam direction. Four segments drawn can independently cover four own sectors.

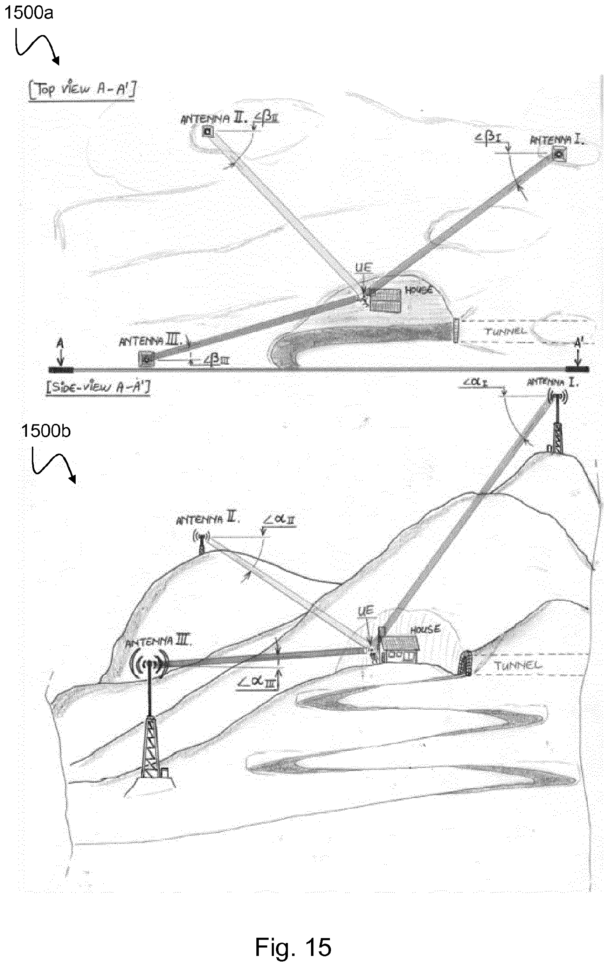

Fig. 15 shows a top view 1500a and a side view 1500b of a geographical area illustrating location determination through a connectivity to multiple antennas according to an implementation form.

Location determination may be reached through a connectivity to multiple antennas. Through the centralized collection of the computed values from each BSS, (e)NodeB or equal in an BSC-like node for multiple antennas, the geological parameter of an appropriate database can be calculated to these to know in what exact position the UE is operating. These data may be used by the UE as well to compute its own position within the coverage of various antennas.

The drawing shows the principal of such a way of location determination by cellular network antennas. As with the for instance phased array antennas, the position as well as elevation measurements may become a normal situation, as a tilting-down of the antenna shouldn't be a pre-set in an antenna-installation.

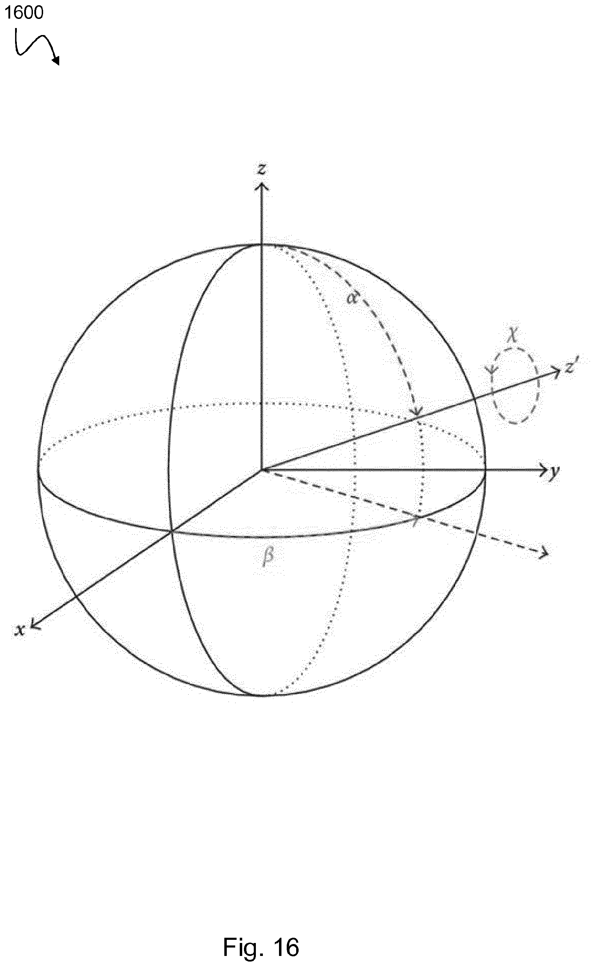

Fig. 16 shows a sphere 1600 with various angles between the x, y and z legs for illustrating the determination of a location of a mobile terminal according to an implementation form.

Each single antenna may have its own matrix in which both, stable- or static- as well as variable entities may be collected and stored. This may also include the sending out of a radio signal through de- and reflection to a destination and the logical paths it could take. This may include the capture of any transmission and the therefrom resulting delay. Such a capture may as such include the various deviations in a transmission needed to reach a UE behind for instance various structures. Also the transmission towards a UE under the influence of variables may be captured for also other evaluations, in the sense of a corrective entity.

Every capture may be tried to consolidate in a range if possible, to reduce the quantum of entries, as especially in urban communities where a large part of the communication is provided to a mobile user with an UE in dedicated areas and/or a street from an antenna. Also in for instance rural environments, where almost any de- and reflection and/or deviations are occurring, a reduction of entries to trajectories may be possible.

The total factor of delay, as well as the transmission angle from the antenna are just a couple of the major entities in such a consolidation. The issue of any transmission angles from antennas may be enhanced when using phased array-antennas as describe above, thus adding to a further precision.

A correction matrix, which may also be updated by just performed transmissions, may enable cellular network operators to determine- and offer exact locations in nearly or respectively comparable to the same class as very expensive satellite navigational systems do. Apart from the matrix, which may be in the form of a storage in which all data is collected from the transmissions and their evaluations of the antenna-sites (e. g. BSS, (e)Node B, etc.), also an increased computing ability may be provided in comparison to the nowadays provided abilities to update all variables in a preset modus.

The independence of exact location determinations to satellite systems and herewith on the satellite-specific processors have the various advantages as described in the following.

No more "black-outs" may be experienced, when the mobile station is not in sight with the minimally needed multiple navigational satellites.

An enhanced location-determination can be provided, as for instance in tunnels or subway-systems, as long as a cellular network which offers the determination method which is described in this disclosure operates in these objects. With this, especially in cases of emergencies, a never before available capability may be achieved to discover potential casualties and/or victims and rescuing these to increase their potential to survive a tragedy or give their family a comfort.

No hindrances or failure which may be caused by any alterations, migrations, modernisations and/or even replacements to any satellite-based positioning system, in case of a full dependency on the GPS-technology for position determinations is existent within the cellular network.

Cheaper UE possible for the network's customers as neither an Assisted Global Positioning System (A-GPS) chip, nor any Near Location Based Services (NLBS) interfaces or similar are needed in such networks, which use the method in this disclosure. Only a SIM-card of the cellular network would fully do. Through this either the network's revenue may be lifted up, or the network's losses in the sale of a UE may decrease.

Even as you can't exclude any A-GPS processors in any UE, due to the dominant position of this highly and excessively marketed GPS-dependency, you may still be able to position UE-models with no NLBS-interfaces or similar, as these are truly superfluous in general. The proposed method in this document would make -*at least*- NLBS a full surplus to the requirements.

All services where an exact location determination is needed to provide a service to the network's customer can be delivered to the customer, without any third parties to provide the location determination. With this, especially in situations where in the nowadays (GPS based-) location determinations are a pre-set, *what is expected,* a full independence to any foreign service-provisioning -*on which you can only relay, but have no influence on*-can be achieved and even be extended to situations where these regular providers have never been able to provide a location determination before.

Additional applications can be developed for the network's offered enhanced location-determination, as for instance one could subscribe for the offered enhanced location service of the cellular network's operator. The various applications may for instance differentiate on the basis of the offered precision in the available location-determination abilities of the cellular network. (Future) apps may have a preset in the needed precision of an offered location-determination.

The methods, systems and devices described herein may be implemented as electrical and/or optical circuit within a chip or an integrated circuit or an application specific integrated circuit (ASIC). The invention can be implemented in digital and/or analogue electronic and optical circuitry.

The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The invention can be implemented in digital electronic circuitry, or in computer hardware, firmware, software, or in combinations thereof, e.g. in available hardware of conventional optical transceiver devices or in new hardware dedicated for processing the methods described herein.

The present disclosure also supports a computer program product including computer executable code or computer executable instructions that, when executed, causes at least one computer to execute the performing and computing steps described herein, in particular the method 500 as described above with respect to Fig. 5 and the techniques described above with respect to Figs. 6 to 16. Such a computer program product may include a readable non-transitory storage medium storing program code thereon for use by a computer. The program code may perform the method 500 as described above with respect to Fig. 5.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. Method (500) for locating a mobile station within a mobile cellular network, the method comprising:

transmitting (501) at least three radio signals between the mobile station and a corresponding number of at least three base stations, wherein each of the at least three radio signals comprises a time information indicating a transmittal time of the respective radio signal;

computing (502) for each of the at least three radio signals a time delay based on a difference between an arrival time and the transmittal time of the respective radio signal;

retrieving (503) for each of the at least three radio signals information about transmission path losses of the respective radio signal from a data storage, wherein the information about transmission path losses is stored as a correction matrix in the data storage;

computing (504) for each of the at least three radio signals a distance of the mobile station to the respective base station based on the time delay and the information about transmission path losses; and

determining (505) a location of the mobile station based on trilateration of the at least three distances,
**characterized by**:

updating the correction matrix based on the following events: internal events occurring within the mobile cellular network, external events occurring in an antenna coverage region of the mobile station and the respective base station, and static events in a geographical region of the mobile station and the respective base station,

wherein the internal events within the mobile cellular network are related to: access latency, delays, disturbances, error detection and correction, interferences;

wherein the external events are related to changes of the following parameters: attenuation-loss parameters, channel characteristics, electronic field within air layer, loss-of-signal, temperature, humidity, motion, angle of transmission;

wherein the static events are related to changes in the statics of a coverage area of a single antenna of the mobile station or the corresponding base station, comprising the following: antenna height, antenna position, antenna descent, antenna elevation, objects within a coverage area of the antenna, height and width sizes of the objects, specific angles of the objects with respect to altitude, latitude and longitude to the antenna, material on a facade towards the antenna, reflection areas of the objects, materials of the objects.

2. The method (500) of claim 1, comprising:

computing a coarse distance of the mobile station to the respective base station based on the computed time delay and the speed of light; and

refining the computing of the distance of the mobile station to the respective base station by applying the correction matrix to the coarse distance.

3. The method (500) of claim 1 or 2, comprising:

relocating an evolved calculation- and computing task of radio access network (RAN) node elements in a computer center; and

with an increase of computing power using more detailed and precise geographical data to measure and define the transmission paths over the air with their internal, external and static events within their coverage region.

4. The method (500) of one of the preceding claims, comprising:
deriving a direct transmission path between the mobile station and the respective base station from the static events.

5. The method (500) of one of the preceding claims,
wherein transmitting the at least three radio signals is mobile-originated or mobile-terminated.

6. The method (500) of one of the preceding claims,
wherein the information about transmission path losses of the respective radio signal comprises a transmitting antenna identifier and an atomic clock reference time.

7. The method (500) of one of the preceding claims,
wherein the data storage is located in a base station controller (BSC) or a radio network controller (RNC) configured to control the respective base station.

8. The method (500) of one of the preceding claims, comprising:
evaluating the information about transmission path losses based on the following formula: $L = 20 \cdot \log_{10}(4 \cdot \pi \cdot d)/\lambda$, where $L$ is a path loss in dB of the respective transmission path, $d$ is a distance of the respective transmission path and $\lambda$ is a wavelength of the respective radio signal.

9. Radio network (600), comprising:

at least three base stations (601, 602, 603); and
a radio network controller (604) configured:

to initiate transmitting at least three radio signals (611, 612, 613) between a mobile station (605) within a coverage of the radio network (600) and a corresponding number of the at least three base stations (601, 602, 603), wherein each of the at least three radio signals (611, 612, 613) comprises a time information (621, 622, 623) indicating a transmittal time of the respective radio signal (611, 612, 613);

to compute for each of the at least three radio signals (611, 612, 613) a time delay based on a difference between an arrival time and the transmittal time of the respective radio signal (611, 612, 613);

to retrieve for each of the at least three radio signals (611, 612, 613) information about transmission path losses of the respective radio signal from a data storage (606), wherein the information about transmission path losses is stored as a correction matrix in the data storage (606);

to compute for each of the at least three radio signals (611, 612, 613) a distance of the mobile station (605) to the respective base station (601, 602, 603) based on the time delay and the information about transmission path losses; and

to determine a location of the mobile station (605) based on trilateration of the at least three distances,

**characterized in that**:

the radio network controller (604) is configured to update the correction matrix based on the following events: internal events occurring within the mobile cellular network, external events occurring in an antenna coverage region of the mobile station and the respective base station, and static events in a geographical region of the mobile station and the respective base station,

wherein the internal events within the mobile cellular network are related to: access latency, delays, disturbances, error detection and correction, interferences,

wherein the external events are related to changes of the following parameters: attenuation-loss parameters, channel characteristics, electronic field within air layer, loss-of-signal, temperature, humidity, motion, angle of transmission,

wherein the static events are related to changes in the statics of a coverage area of a single antenna of the mobile station or the corresponding base station, comprising the following: antenna height, antenna position, antenna descent, antenna elevation, objects within a coverage area of the antenna, height and width sizes of the objects, specific angles of the objects with respect to altitude, latitude and longitude to the antenna, material on a facade towards the antenna, reflection areas of the objects, materials of the objects.

10. The radio network (600) of claim 9,
    wherein each base station (601, 602, 603) comprises a plurality of antennas,
    wherein the information about transmission path losses related to a specific antenna of a base station is stored in a data storage (606) assigned to the specific antenna of the base station (601, 602, 603).

**Patentansprüche**

1. Verfahren (500) zum Orten einer mobilen Station in einem mobilen zellularen Netz, wobei das Verfahren Folgendes umfasst:

   Übertragen (501) von wenigstens drei Funksignalen zwischen der mobilen Station und einer entsprechenden Anzahl von wenigstens drei Basisstationen, wobei jedes der wenigstens drei Funksignale Zeitinformationen umfasst, die eine Übertragungszeit des jeweiligen Funksignals anzeigen;
   Berechnen (502) einer Zeitverzögerung für jedes der wenigstens drei Funksignale auf Grundlage eines Unterschieds zwischen einer Ankunftszeit und der Übertragungszeit des jeweiligen Funksignals;
   Abrufen (503) von Informationen über Übertragungswegverluste des jeweiligen Funksignals aus einem Datenspeicher für jedes der wenigstens drei Funksignale, wobei die Informationen über Übertragungswegverluste als eine Korrekturmatrix in dem Datenspeicher gespeichert sind;
   Berechnen (504) einer Entfernung der mobilen Station zu der jeweiligen Basisstation für jedes der wenigstens drei Funksignale auf Grundlage der Zeitverzögerung und der Informationen über Übertragungswegverluste; und
   Bestimmen (505) eines Standortes der mobilen Station auf Grundlage von Trilateration der wenigstens drei Entfernungen,
   **gekennzeichnet durch**:

   Aktualisieren der Korrekturmatrix auf Grundlage der folgenden Ereignisse: interner Ereignisse, die in dem mobilen zellularen Netz auftreten, äußerer Ereignisse, die in einem Antennenfunkbereich der mobilen Station und der jeweiligen Basisstation auftreten, und statischer Ereignisse in einem geographischen Bereich der mobilen Station und der jeweiligen Basisstation,
   wobei die internen Ereignisse in dem mobilen zellularen Netz auf Folgendes bezogen sind: Zugriffslatenz, Verzögerungen, Störungen, Fehlererfassung und Korrektur, Interferenzen;
   wobei die äußeren Ereignisse auf Veränderungen der folgenden Parameter bezogen sind: Abschwächungsverlustparameter, Kanaleigenschaften, elektronisches Feld in einer Luftschicht, Signalverlust, Temperatur, Feuchtigkeit, Bewegung, Übertragungswinkel;
   wobei die statischen Ereignisse auf Veränderungen der Statik eines Funkgebietes einer einzelnen Antenne der mobilen Station oder der entsprechenden Basisstation bezogen sind, das Folgende umfassend: Antennenhöhe, Antennenposition, Antennenabstieg, Antennenerhöhung, Objekte innerhalb eines Funkgebietes der Antenne, Höhen- und Breitabmessungen der Objekte, spezifische Winkel der Objekte bezogen auf Höhe über dem Meeresspiegel, Breitengrad und Längengrad zu der Antenne, Material auf einer Fassade gegenüber der Antenne, Reflexionsgebiete der Objekte, Materialien der Objekte.

2. Verfahren (500) nach Anspruch 1, Folgendes umfassend:

   Berechnen einer groben Entfernung der mobilen Station zu der jeweiligen Basisstation auf Grundlage der berechneten Zeitverzögerung und der Lichtgeschwindigkeit; und
   Verfeinern des Berechnens der Entfernung der mobilen Station zu der jeweiligen Basisstation durch Anwenden der Korrekturmatrix auf die grobe Entfernung.

3. Verfahren (500) nach Anspruch 1 oder 2, Folgendes umfassend:

   Verlagern einer entwickelten Berechnungs- und Rechenaufgabe von Funkzugangsnetz(radio *access network* - RAN)knotenelementen in ein Rechenzentrum; und
   mit einer Zunahme der Rechenleistung, Verwenden von detaillierteren und genaueren geographischen Daten, um die Luftübertragungswege mit ihren internen, äußeren und statischen Ereignissen in ihrem Funkbereich zu messen und zu definieren.

4. Verfahren (500) nach einem der vorhergehenden Ansprüche, Folgendes umfassend:
   Ableiten eines direkten Übertragungsweges zwischen der mobilen Station und der jeweiligen Basisstation von den statischen Ereignissen.

5. Verfahren (500) nach einem der vorhergehenden Ansprüche,
   wobei das Übertragen der wenigstens drei Funksignale von einer Mobilstation herrührt oder zu einer solchen führt.

6. Verfahren (500) nach einem der vorhergehenden Ansprüche,
   wobei die Informationen über Übertragungswegverluste des jeweiligen Funksignals einen Übertragungsantennenidentifizierer und eine Referenzzeit einer Atomuhr umfassen.

7. Verfahren (500) nach einem der vorhergehenden Ansprüche,
   wobei der Datenspeicher in einer Basisstationsteuervorrichtung (*basis station controller* - BSC) oder einer Funknetzsteuervorrichtung (*radio network controller* - RNC) gelegen ist, die konfiguriert ist, die jeweilige Basisstation zu steuern.

8. Verfahren (500) nach einem der vorhergehenden Ansprüche, Folgendes umfassend:
   Auswerten der Informationen über Übertragungswegverluste auf Grundlage der folgenden Formel: $L = 20 \cdot \log_{10}(4 \cdot \pi \cdot d)/\lambda$, wobei $L$ ein Wegverlust in dB des jeweiligen Übertragungsweges ist, $d$ eine Entfernung des jeweiligen Übertragungsweges ist und A eine Wellenlänge des jeweiligen Funksignals ist.

9. Funknetz (600), Folgendes umfassend:

   wenigstens drei Basisstationen (601, 602, 603); und
   eine Funknetzsteuervorrichtung (604), die für Folgendes konfiguriert ist:

   Einleiten des Übertragens von wenigstens drei Funksignalen (611, 612 ,613) zwischen einer mobilen Station (605) in einem Funkbereich des Funknetzes (600) und einer entsprechenden Anzahl der wenigstens drei Basisstationen (601, 602, 603), wobei jedes der wenigstens drei Funksignale (611, 612, 613) Zeitinformationen (621, 622, 623) umfasst, die eine Übertragungszeit des jeweiligen Funksignals (611, 612, 613) anzeigen;
   Berechnen einer Verzögerungszeit für jedes der wenigstens drei Funksignale (611, 612, 613) auf Grundlage eines Unterschieds zwischen einer Ankunftszeit und der Übertragungszeit des jeweiligen Funksignals (611, 612, 613);
   Abrufen von Informationen über Übertragungswegverluste des jeweiligen Funksignals aus einem Datenspeicher (606) für jedes der wenigstens drei Funksignale (611, 612, 613), wobei die Informationen über Übertragungswegverluste als eine Korrekturmatrix in dem Datenspeicher (606) gespeichert sind;
   Berechnen für jedes der wenigstens drei Funksignale (611, 612, 613) einer Entfernung der mobilen Station (605) zu der jeweiligen Basisstation (601, 602, 603) auf Grundlage der Zeitverzögerung und der Informationen über Übertragungswegverluste; und

Bestimmen eines Standortes der mobilen Station (605) auf Grundlage von Trilateration der wenigstens drei Entfernungen,

**dadurch gekennzeichnet, dass**:

die Funknetzsteuervorrichtung (604) zu Folgendem konfiguriert ist: Aktualisieren der Korrekturmatrix auf Grundlage der folgenden Ereignisse: interner Ereignisse, die in dem mobilen zellularen Netz auftreten, äußerer Ereignisse, die in einem Antennenfunkbereich der mobilen Station und der jeweiligen Basisstation auftreten, und statischer Ereignisse in einem geographischen Bereich der mobilen Station und der jeweiligen Basisstation,

wobei die internen Ereignisse in dem mobilen zellularen Netz auf Folgendes bezogen sind: Zugriffslatenz, Verzögerungen, Störungen, Fehlererfassung und Korrektur, Interferenzen;

wobei die äußeren Ereignisse auf Veränderungen der folgenden Parameter bezogen sind: Abschwächungsverlustparameter, Kanaleigenschaften, elektronisches Feld in einer Luftschicht, Signalverlust, Temperatur, Feuchtigkeit, Bewegung, Übertragungswinkel;

wobei die statischen Ereignisse auf Veränderungen der Statik eines Funkgebietes einer einzelnen Antenne der mobilen Station oder der entsprechenden Basisstation bezogen sind, das Folgende umfassend: Antennenhöhe, Antennenposition, Antennenabstieg, Antennenerhöhung, Objekte innerhalb eines Funkgebietes der Antenne, Höhen- und Breitenabmessungen der Objekte, spezifische Winkel der Objekte bezogen auf Höhe über dem Meeresspiegel, Breitengrad und Längengrad zu der Antenne, Material auf einer Fassade gegenüber der Antenne, Reflexionsgebiete der Objekte, Materialien der Objekte.

10. Funknetz (600) nach Anspruch 9,

wobei jede Basisstation (601, 602, 603) mehrere Antennen umfasst,

wobei die Informationen über Übertragungswegverluste, die auf eine spezifische Antenne einer Basisstation bezogen sind, in einem Datenspeicher (606) gespeichert sind, der der spezifischen Antenne der Basisstation (601, 602, 603) zugeordnet ist.

**Revendications**

1. Procédé (500) de localisation d'une station mobile au sein d'un réseau cellulaire mobile, le procédé comprenant :

la transmission (501) d'au moins trois signaux radio entre la station mobile et un nombre correspondant d'au moins trois stations de base, dans lequel chacun des au moins trois signaux radio comprend une information de temps indiquant un temps de transmission du signal radio respectif ;

le calcul informatique (502) pour chacun des au moins trois signaux radio d'un retard de temps d'après une différence entre un temps d'arrivée et le temps de transmission du signal radio respectif ;

la récupération (503) pour chacun des au moins trois signaux radio d'informations concernant des pertes de voie de transmission du signal radio respectif depuis un stockage de données, dans lequel les informations concernant des pertes de voie de transmission sont stockées en tant que matrice de correction dans le stockage de données ;

le calcul informatique (504) pour chacun des au moins trois signaux radio d'une distance entre la station mobile et la station de base respective d'après le retard de temps et les informations concernant des pertes de voie de transmission ; et

la détermination (505) d'une localisation de la station mobile d'après une trilatération des au moins trois distances, **caractérisé par** :

la mise à jour de la matrice de correction d'après les événements suivants : des événements internes survenant au sein du réseau cellulaire mobile, des événements externes survenant dans une région de couverture d'antenne de la station mobile et de la station de base respective, et des événements de parasites dans une région géographique de la station mobile et de la station de base respective,

dans lequel les événements internes au sein du réseau cellulaire mobile sont liés à : une latence d'accès, des retards, des perturbations, une détection et correction d'erreur, des interférences ;

dans lequel les événements externes sont liés à des changements des paramètres suivants : des paramètres de perte d'atténuation, des caractéristiques de canal, un champ électronique au sein d'une couche d'air, une perte de signal, la température, l'humidité, le mouvement, l'angle de transmission ;
dans lequel les événements de parasites sont liés à des changements des parasites d'une zone de couverture d'une antenne unique de la station mobile ou de la station de base correspondante, comprenant ce qui suit : une hauteur d'antenne, une position d'antenne, une descente d'antenne, une élévation d'antenne, des objets au sein d'une zone de couverture de l'antenne, des tailles de hauteur et de largeur des objets, des angles spécifiques des objets par rapport à l'altitude, la latitude et la longitude vis-à-vis de l'antenne, un matériau sur une façade vers l'antenne, des zones de réflexion des objets, des matériaux des objets.

2. Procédé (500) selon la revendication 1, comprenant :

le calcul informatique d'une distance approximative entre la station mobile et la station de base respective d'après le retard de temps calculé et la vitesse de la lumière ; et
l'affinage du calcul informatique de la distance entre la station mobile et la station de base respective en appliquant la matrice de correction à la distance approximative.

3. Procédé (500) selon la revendication 1 ou 2, comprenant :

la relocalisation d'un calcul évolué et le calcul d'une tâche d'éléments de noeud de réseau d'accès radio (RAN) dans un centre de calcul informatique ; et
avec une augmentation de puissance de calcul informatique l'utilisation de données géographiques plus détaillées et précises pour mesurer et définir les voies de transmission sur l'air avec leurs événements internes, externes et de parasites au sein de leur zone de couverture.

4. Procédé (500) selon l'une des revendications précédentes, comprenant :
la dérivation d'une voie de transmission directe entre la station mobile et la station de base respective à partir des événements de parasites.

5. Procédé (500) selon l'une des revendications précédentes,
dans lequel la transmission des au moins trois signaux radio provient d'un mobile ou est à destination d'un mobile.

6. Procédé (500) selon l'une des revendications précédentes,
dans lequel les informations concernant des pertes de voie de transmission du signal radio respectif comprennent un identifiant d'antenne de transmission et un temps de référence d'horloge atomique.

7. Procédé (500) selon l'une des revendications précédentes,
dans lequel le stockage des données est localisé dans un dispositif de commande de station de base (BSC) ou un dispositif de commande de réseau de radiocommunication (RNC) configuré pour commander la station de base respective.

8. Procédé (500) selon l'une des revendications précédentes, comprenant :
l'évaluation des informations concernant des pertes de voie de transmission d'après la formule suivante : $L = 20 \cdot \log_{10}(4 \cdot \pi \cdot d)/\lambda$, où $L$ est une perte de voie en dB de la voie de transmission respective, d est une distance de la voie de transmission respective et $\lambda$ est une longueur d'onde du signal radio respectif.

9. Réseau de radiocommunication (600), comprenant :

au moins trois stations de base (601, 602, 603) ; et
un dispositif de commande de réseau de radiocommunication (604) configuré :

pour lancer la transmission d'au moins trois signaux radio (611, 612, 613) entre une station mobile (605) au sein d'une couverture du réseau de radiocommunication (600) et un nombre correspondant des au moins trois stations de base (601, 602, 603), dans lequel chacun des au moins trois signaux radio (611, 612, 613) comprend une information de temps (621, 622, 623) indiquant un temps de transmission du signal radio (611, 612, 613) respectif ;
pour calculer informatiquement pour chacun des au moins trois signaux radio (611, 612, 613) un retard de temps d'après une différence entre un temps d'arrivée et le temps de transmission du signal radio (611, 612, 613) respectif ;

pour récupérer pour chacun des au moins trois signaux radio (611, 612, 613) des informations concernant des pertes de voie de transmission du signal radio respectif depuis un stockage de données (606), dans lequel les informations concernant des pertes de voie de transmission sont stockées en tant que matrice de correction dans le stockage de données (606) ;

pour calculer informatiquement pour chacun des au moins trois signaux radio (611, 612, 613) une distance entre la station mobile (605) et la station de base (601, 602, 603) respective d'après le retard de temps et les informations concernant des pertes de voie de transmission ; et

pour déterminer une localisation de la station mobile (605) d'après une trilatération des au moins trois distances,

**caractérisé en ce que** :

le dispositif de commande de réseau de radiocommunication (604) est configuré pour mettre à jour la matrice de correction d'après les événements suivants : des événements internes survenant au sein du réseau cellulaire mobile, des événements externes survenant dans une région de couverture d'antenne de la station mobile et de la station de base respective, et des événements de parasites dans une région géographique de la station mobile et de la station de base respective,

dans lequel les événements internes au sein du réseau cellulaire mobile sont liés à : une latence d'accès, des retards, des perturbations, une détection et correction d'erreur, des interférences,

dans lequel les événements externes sont liés à des changements des paramètres suivants : des paramètres de perte d'atténuation, des caractéristiques de canal, un champ électronique au sein d'une couche d'air, une perte de signal, la température, l'humidité, le mouvement, l'angle de transmission,

dans lequel les événements de parasites sont liés à des changements des parasites d'une zone de couverture d'une antenne unique de la station mobile ou de la station de base correspondante, comprenant ce qui suit : une hauteur d'antenne, une position d'antenne, une descente d'antenne, une élévation d'antenne, des objets au sein d'une zone de couverture de l'antenne, des tailles de hauteur et de largeur des objets, des angles spécifiques des objets par rapport à l'altitude, la latitude et la longitude vis-à-vis de l'antenne, un matériau sur une façade vers l'antenne, des zones de réflexion des objets, des matériaux des objets.

10. Réseau de radiocommunication (600) selon la revendication 9,

dans lequel chaque station de base (601, 602, 603) comprend une pluralité d'antennes,

dans lequel les informations concernant des pertes de voie de transmission liées à une antenne spécifique d'une station de base sont stockées dans un stockage de données (606) attribué à l'antenne spécifique de la station de base (601, 602, 603).

100

101

102

Fig. 1

Fig. 2

300

304

GPS Satellites

GPS
signal

GPS
signal

GPS
transceiver

301

302

303

Assistance
information

MSC

AGPS
Server

Mobile terminal
with GPS receiver

Base
station

Fig. 3

400

Fig. 4

500

| transmitting at least three radio signals |
| --- |

| computing for each radio signal a time delay |
| --- |

| retrieving for each radio signal information about transmission path losses from a data store |
| --- |

| computing for each radio signal a distance of the mobile station to a respective base station based on the time delay and the information about transmission path losses |
| --- |

| determining a location of the mobile station based on triangulation of the at least three distances to respective antennas |
| --- |

Fig. 5

Fig. 6

700

THE DAMPENING AND/OR WEAKENING OF RADIO
SIGNAL BY E.G. REFLECTION(S), ETC.

701

702

BSS
/(E)NODE B
/ANTENNA

SANDDUNES
/MOUNTAINS
/WASTE
/...

FACTORY

UE

URBAN-/METROPOLITAN
HOUSING(S)

Fig. 7

800

Fig. 8

900

911

901

ANTENNA

903

902

913

912

Division of the coverage segments of a BSS/(e)NODEB and likewise.
(in this example, each has a 120° segment within the total coverage).

RADIO BEAM

Fig. 9

a)

b)

Fig. 10

1100

1101

r1

(0,0)
P1

r2

P2
(d,0)

d

1102

Intersections

x positive
right

j

r3

i

(i,j)

P3

y positive
down

1103

Fig. 11

Fig. 12

1300

256
antenna
elements

1301    1302

1320

1303    1304

16
antenna
elements

1310

Fig. 13

1400

1400a

SISO | Tx |

1400b

SIMO | Tx |

1400c

MISO | Tx |

1400d

MIMO | Tx |

| Rx |

| Rx |

| Rx |

| Rx |

PHASING OF
ANTENNAS
DETERMINE
THEIR BEAM
DIRECTION
(FOUR SEGMENTS
DRAWN CAN IN-
DEPENDANTLY
COVER FOUR
OWN SECTORS).

Fig. 14

1500a

1500b

Fig. 15

1600

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010271263 A